(19) Europäisches Patentamt
European Patent Office
Office européen des brevets

(11) **EP 2 178 233 A1**

(12) **EUROPEAN PATENT APPLICATION**
published in accordance with Art. 153(4) EPC

(43) Date of publication:
**21.04.2010 Bulletin 2010/16**

(51) Int Cl.:
***H04J 11/00*** *(2006.01)*   ***H04B 1/16*** *(2006.01)*
***H04B 1/707*** *(2006.01)*

(21) Application number: **08826933.7**

(22) Date of filing: **06.08.2008**

(86) International application number:
**PCT/JP2008/064106**

(87) International publication number:
**WO 2009/020148 (12.02.2009 Gazette 2009/07)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.08.2007 JP 2007204544**

(71) Applicant: **Sharp Kabushiki Kaisha**
**Osaka-shi, Osaka 545-8522 (JP)**

(72) Inventors:
• **YOSHIMOTO, Takashi**
**c/o Sharp Kabushiki Kaisha**
**Osaka, 545-8522 (JP)**

• **YAMADA, Ryota**
**c/o Sharp Kabushiki Kaisha**
**Osaka, 545-8522 (JP)**
• **SHIMEZAWA, Kazuyuki**
**c/o Sharp Kabushiki Kaisha**
**Osaka, 545-8522 (JP)**

(74) Representative: **Müller - Hoffmann & Partner Patentanwälte**
**Innere Wiener Strasse 17**
**81667 München (DE)**

(54) **RECEIVER AND RECEPTION METHOD**

(57) A receiver includes a replica signal generating unit which generates a replica signal as a replica of a transmission signal based on a received signal; a time zone setting unit which sets a plurality of time zones to be extracted such that a part of a signal interval of the received signal is included in the plurality of time zones to be extracted; a signal extracting unit which extracts a signal in a predetermined time zone of the received signal based on the replica signal and a time zone which is set by the time zone setting unit; a combining unit which combines signals of the respective time zones extracted by the signal extracting unit; and a decoding processing unit which carries out decoding on the signal combined by the combining unit.

FIG. 4

**Description**

TECHNICAL FIELD

The present invention relates to a receiver and a receiving method and, particularly to, a receiver and a receiving method of receiving signals in a multicarrier system.
Priority is claimed on Japanese Patent Application No. 2007-204544 filed on August 6, 2007, the content of which is incorporated herein by reference.

BACKGROUND ART

A transmission system using OFDM (Orthogonal frequency Division Multiplex) can alleviate the influence of the multi-path delay in transmitting a digital signal at high speed, by being transmitted as multi-carriers and by inserting a guard interval (GI).
However, in the multi-carrier transmission, when there is a delayed wave exceeding the guard interval, inter symbol interference (ISI) which is caused by the previous symbol inserted in an FFT (Fast Fourier Transform) interval, or inter carrier interference (ICI) which is caused by a symbol gap in the Fast Fourier Transform, that is, a discontinuous interval of a signal, occur.

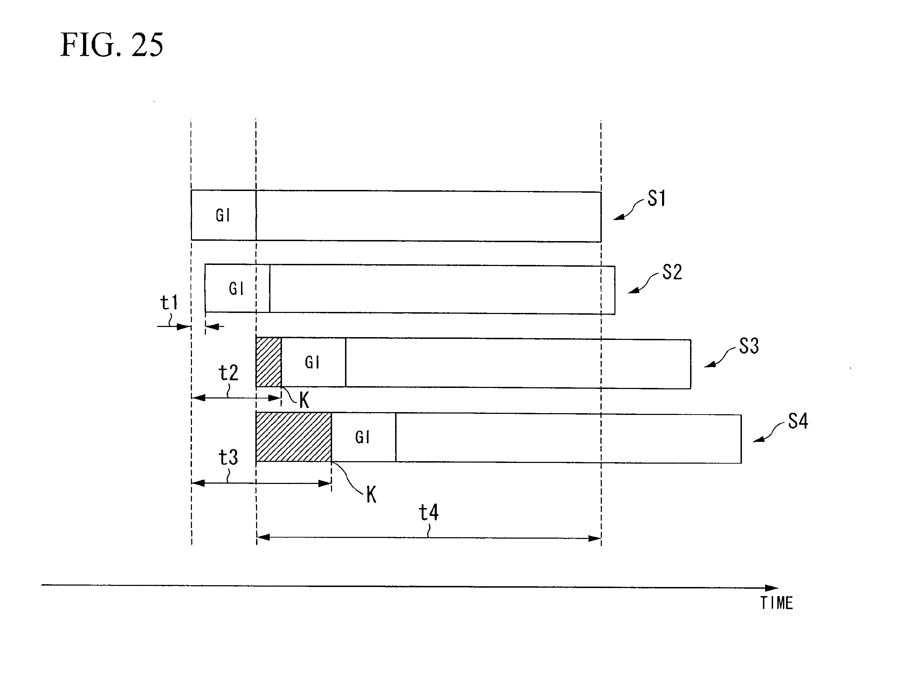

FIG. 25 is a diagram illustrating signals arriving at one wireless receiver from one wireless transmitter through a multipath environment. In the drawing, the passing of time is shown along the horizontal axis. Symbols s1 to s4 denote signals arriving at the wireless receiver from the wireless transmitter through the multipath environment, that is, through four multipaths. At the front end of each of the symbols, a guard interval GI is inserted, which is a copy of the trailing portion of each of the symbols.
The first signal s1 from above shows a direct signal, the second signal s2 shows a signal delayed with t1 in the guard interval GI. The direct signal and the delayed wave are also referred to as arriving waves. In addition, the third and fourth delayed signals s3 and s4 show the signals delayed with t2 and t3, respectively, which exceed the guard interval GI.
The hatched portions preceding the third and fourth signals s3 and s4 show portions in which symbols preceding a desired symbol come into the FFT interval of the desired symbol, while the interval t4 denotes the FFT interval of the desired symbol, and the hatched portions constitute the above-mentioned ISI components. The ISI components, which result from the interference components, cause deterioration in the characteristics of the demodulated signal. In addition, the third and fourth delayed signals s3 and s4 involve a symbol gap K during the interval t4, which causes the above-mentioned ICI.

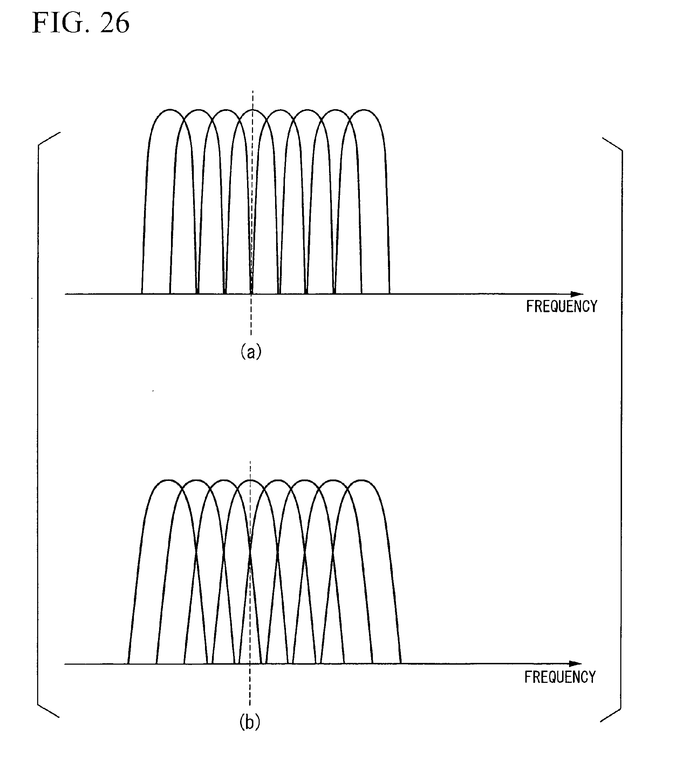

FIG. 26(a) and FIG. 26(b), is a diagram illustrating, with respect to a multicarrier signal transmission/reception operation, subcarriers which are kept in an orthogonal relationship and subcarriers which are interfered with therebetween due to the ICI. FIG. 26(a) shows the subcarriers which are free of the ICI and thus not interfered with therebetween. FIG. 26(b) shows the subcarriers which are interfered with therebetween due to the ICI.
When there is no delayed wave with a delay exceeding the guard interval GI, paying attention to the frequency marked with a dotted line in FIG. 26(a), only one subcarrier component is included in the signal component, while no other subcarrier components are included. This state is a state in which the subcarriers are kept in an orthogonal relationship. In an ordinary multicarrier communication, the demodulation is carried out in this state.
In contrast, when there are delayed signals with delays exceeding the guard interval GI, paying attention to the frequency marked with a dotted line shown in FIG. 26(b), the adjacent subcarrier components other than the desired subcarrier component are included and interfered with therebetween. This state is a state in which the subcarriers are not kept in an orthogonal relationship. The ICI causes deterioration in the characteristics.
A technique of avoiding the deterioration in the characteristics due to the ISI and ICI, in which there are the delayed signals with delays exceeding the guard interval GI, is proposed in Patent Document 1. In the technique, after the first-round demodulation operation is carried out, undesired subcarrier replica signals containing the ISI component and the ICI component are generated using an error-corrected result (MAP demodulator output), and then the second-round demodulation operation is carried out to make the received signal free of the ISI and the ICI to avoid the deterioration in the characteristics due to the ISI and the ICI.
On the other hand, as the combination technique of the multicarrier transmission system with the CDM (code division multiplexing) system, the MC-CDM (multicarrier-code division multiplexing) system is proposed.

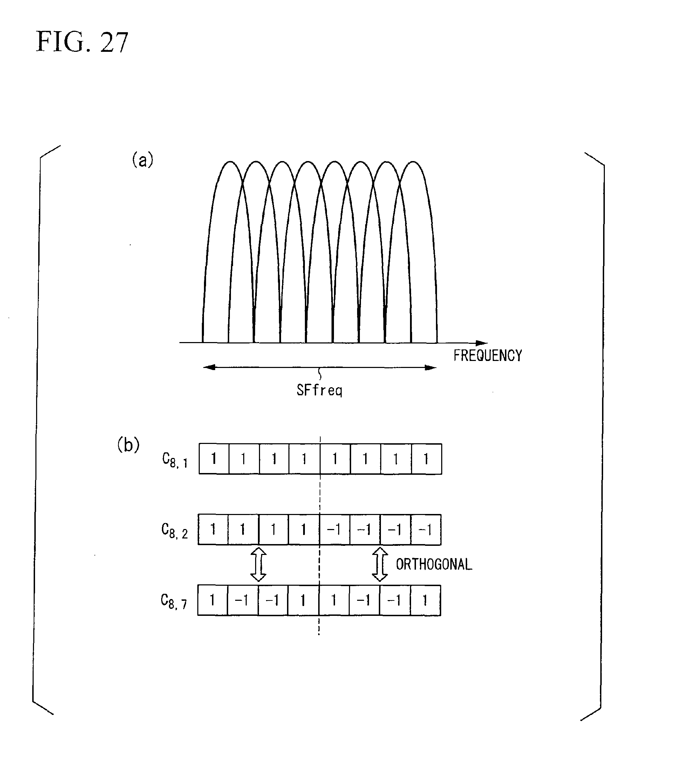

FIG. 27(a) and FIG. 27(b) are diagrams illustrating the relationship between the subcarriers and the orthogonal codes corresponding to the respective subcarriers in the MC-CDMA system. In the drawings, the frequency is shown along the horizontal axis. FIG. 27(a) shows eight subcarriers in the MC-CDM system, as an example. In addition, FIG. 27(b) shows three kinds of the orthogonal codes $C_{8,1}$, $C_{8,2}$, and $C_{8,7}$ which correspond to the respective subcarriers. Here, $C_{8,1}=(1, 1, 1, 1, 1, 1, 1, 1)$; $C_{8,2}=(1, 1, 1, 1, -1, -1, -1, -1)$; and $C_{8,7}=(1, -1, -1, 1, 1, -1, -1, 1)$. By multiplying data by three kinds of orthogonal codes, three data sequences can be transmitted in a multiplexed fashion at the same time and using the same frequency, which is one of the features of the MC-CDM system.

Further, each of the three kinds of orthogonal codes $C_{8,1}$, $C_{8,2}$, and $C_{8,7}$ is an orthogonal code of which repetition period is 8, and the data demultiplexing can be carried out on the orthogonal codes by the period-by-period addition. Further, SFfreq in FIG. 27(a) denotes the repetition period of the orthogonal code.

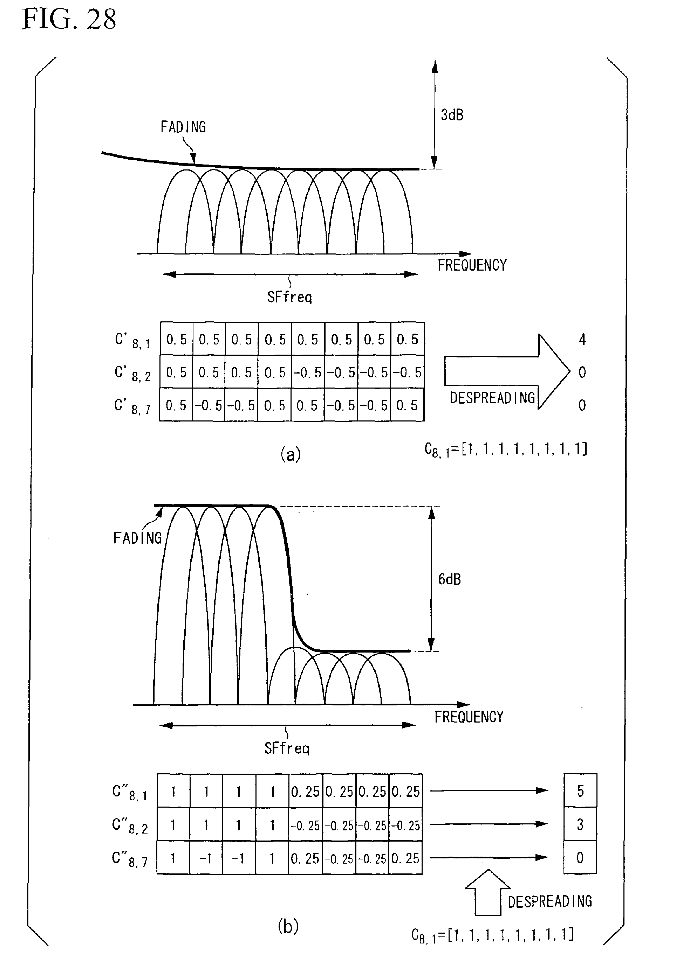

FIG. 28(a) and FIG. 28(b) are diagrams illustrating codes $C'_{8,1}$, $C'_{8,2}$, $C'_{8,7}$, $C''_{8,1}$, $C''_{8,2}$, and $C''_{8,7}$ when signals in the MC-CDMA system are propagated in the air and received by a wireless receiver. FIG. 28(a) shows a case where there is no frequency fluctuation during the repetition period of the orthogonal codes. At this time, the despreading is carried out with the code $C_{8,1}$. In other words, a scalar product with the code $C_{8,1}$ is calculated, so that the code $C'_{8,1}$ is equal to 4; and the codes $C'_{8,2}$ and $C'_{8,7}$ are equal to zero. This state is referred to as a state where the inter-code orthogonality is maintained.

In contrast, as shown in FIG. 28(b), when there is no frequency fluctuation during the repetition period of the orthogonal codes, the despreading with the code $C_{8,1}$ leads to the code $C''_{8,1}$ being equal to 5, the codes $C''_{8,2}$ being equal to 3, and $C''_{8,7}$ being equal to zero. In other words, there are interference components between the codes $C''_{8,1}$ and $C''_{8,2}$, so that the codes no longer maintain orthogonality. As described above, when the frequency fluctuation in the propagation channels occurs at a high rate (fluctuating in the frequency direction at a high rate), the multicode interference in the MC-CDMA system causes the deterioration in the characteristics.

An approach to improve the deterioration in the characteristics caused by the collapsed inter-code orthogonality is described in Patent Document 2, Non-Patent Document 1, Non-Patent Document 2, and Non-Patent Document 3. In the technique according to the related art, the signals other than the desired codes are eliminated using the data which is error-corrected or despreaded in order to remove the multicode interference caused by code-multiplexing in the MC-CDMA communication in both the up link and the down link, even though the up link is different from the down link, so that the improvement in the characteristics is achieved.

Patent Document 1: Japanese Patent Application, First Publication No. 2004-221702
Patent Document 2: Japanese Patent Application, First Publication No. 2005-198223
Non-Patent Document 1: "Downlink Transmission of Broadband OFCDM Systems-Part I: Hybrid Detection", Zhou, Y.; Wang, J.; Sawahashi, M. Page(s): 718-729, IEEE Transactions on Communication (Vol. 53, Issue 4)
Non-Patent Document 2: "Downlink Transmission of Broadband OFCDM Systems-Part III: Turbo-Coded", Zhou, Y.; Wang, J.; Sawahashi, M. Page(s): 132-140, IEEE Journal on selected Areas in Communications, Vol. 24, No. 1
Non-Patent Document 3: "Frequency-domain Soft Interference cancellation for Multicode CDMA Transmissions", K. Ishihara, K. Takeda, F. Adachi, in Proc. IEEE VTC2006-Spring

DISCLOSURE OF INVENTION

Problem to be Solved by the Invention

However, the above-mentioned technique involves the problem that an increased amount of calculation is required for demodulation of multicarrier signals having a number of subcarriers and of the MC-CDM signals. In addition, it involves the problem that the amount of calculation increases by the number of the code multiplexing when the multicode interference is removed at the time of the MC-CDM.

The present invention has been made in the above-mentioned circumstances, and an object is to provide a receiver and a receiving method which can reduce the amount of calculation when signals received from a transmitter are demodulated.

Means for Solving the Problem

(1) According to one aspect of the present invention, there is provided a receiver which includes a replica signal generating unit which generates a replica signal as a replica of a transmission signal based on a received signal; a time zone setting unit which sets a plurality of time zones to be extracted such that a part of a signal interval of the received signal is included in the plurality of time zones to be extracted; a signal extracting unit which extracts a signal in a predetermined time zone of the receive signal based on the replica signal and a time zone which is set by the time zone setting unit; a combining unit which combines signals of the respective time zones extracted by the signal extracting unit; and a decoding processing unit which carries out decoding on the signal combined by the combining unit.

(2) In the receiver according to the aspect of the present invention, the signal extracting unit is provided with: a delayed replica generating unit which is a replica of a delayed wave of each time zone based on a propagation channel estimated value of the receive signal, a replica signal generated by the replica signal generating unit, and a time zone set by the time zone setting unit; and a subtraction unit which subtracts the replica of the delayed wave generated by the delayed wave replica generating unit from the received signal.

(3) In the receiver according to the aspect of the present invention, the time zone setting unit sets the plurality of time zones such that a time length excepting a total time of a signal interval included in the plurality of time zones to be extracted from a total time of the plurality of time zones to be extracted becomes an estimated interval of a delayed wave of the received signal.

(4) In the receiver according to the aspect of the present invention, the time zone setting unit sets at least one time zone such that a power of a signal included in at least one time zone of the plurality of time zones to be extracted is maximized.

(5) In the receiver according to the aspect of the present invention, the time zone setting unit sets the plurality of time zones such that a signal power difference of the plurality of time zones is smaller than a predetermined value.

(6) In the receiver according to the aspect of the present invention, the delayed wave replica generating unit generates a delayed wave replica having a length shorter than a time zone set by the time zone setting unit.

(7) In the receiver according to the aspect of the present invention, the time zone setting unit sets the plurality of time zones based on a predetermined time.

(8) In the receiver according to the aspect of the present invention, the time zone setting unit sets a guard interval length as the predetermined time.

(9) In the receiver according to the aspect of the present invention, the time zone setting unit sets each of the time zones such that a difference between a signal power value of each time zone and a predetermined power value is smaller than a predetermined value.

(10) In the receiver according to the aspect of the present invention, the time zone setting unit sets a value smaller than a signal power in a guard interval length of a received signal as the predetermined power value.

(11) According to another aspect of the present invention, there is provided a receiving method which includes a replica signal generating step of generating a replica signal as a replica of a transmission signal based on a received signal; a time zone setting step of setting a plurality of time zones to be extracted such that a portion of a signal interval of the received signal is included in the plurality of time zones to be extracted; a signal extracting step of extracting a signal in a predetermined time zone of the receive signal based on the replica signal and a time zone which is set in the time zone setting step; a combining step of combining signals of the respective time zones extracted in the signal extracting step; and a decoding processing step of carrying out decoding on the signal combined in the combining step.

Effect of the Invention

According to the receiver and the receiving method of the present invention, a predetermined time zone for extracting the received signals is set such that a predetermined signal interval to be extracted is overlapped. A delayed wave replica is generated to eliminate unnecessary delayed wave components from the time zone. The delayed wave replica is eliminated from the received signals. Therefore, the amount of calculation can be reduced for demodulating the signals received from a transmitter.

BRIEF DESCRIPTION OF THE DRAWINGS

FIG. 1 is a block diagram schematically illustrating a configuration of a wireless transmitter 100 according to a first embodiment of the invention.
FIG. 2 is a diagram illustrating an example of a frame format according to the first embodiment of the invention.
FIG. 3 is a block diagram schematically illustrating a configuration of a wireless receiver 200 according to the first embodiment of the invention.
FIG. 4 is a diagram illustrating an example of a configuration of a MAP detection unit according to the first embodiment of the invention.
FIG. 5 is a flowchart illustrating an example of an operation of the wireless receiver 200 according to the first embodiment of the invention.
FIG. 6 is a block diagram illustrating a configuration of an extraction interval setting unit according to the first embodiment of the invention.
FIG. 7 is a diagram illustrating the division of a time zone of the extraction interval setting unit according to the first embodiment of the invention.
FIG. 8 is a diagram illustrating the division of a time zone of the extraction interval setting unit according to the first embodiment of the invention.
FIG. 9 is a diagram illustrating the division of a time zone of the extraction interval setting unit according to the first embodiment of the invention.
FIG. 10 is a diagram illustrating a channel impulse response estimation value according to the first embodiment of the invention.
FIG. 11 is a diagram comparing a time zone setting with an overlap interval with a time zone setting without an overlap interval according to the first embodiment of the invention.
FIG. 12 is a diagram illustrating a channel impulse response estimation value in the first-round process and the MMSE filter unit according to the first embodiment of the invention.
FIG. 13 is a diagram illustrating a channel impulse response estimation value in the first process and the MMSE filter unit according to the first embodiment of the invention.
FIG. 14 is a diagram illustrating a configuration of a propagation channel and noise power estimation unit according to the first embodiment of the invention.
FIG. 15 is a diagram illustrating an example of a configuration of the MAP detection unit according to a second embodiment of the invention.
FIG. 16 is a block diagram illustrating a configuration of an extraction interval setting unit 240 according to the second embodiment of the invention.
FIG. 17 is a diagram illustrating the division of the time zone of the extraction interval setting unit according to the second embodiment of the invention.
FIG. 18 is a diagram illustrating an estimated channel impulse response value according to the second embodiment of the invention.
FIG. 19 is a diagram illustrating a configuration of the MAP detection unit of the wireless receiver 200 according to a third embodiment of the invention.
FIG. 20 is a diagram illustrating a format including a control channel.
FIG. 21 is a diagram illustrating the extraction interval setting unit according to the third embodiment of the invention.
FIG. 22 is a diagram illustrating the division of the time zone of the extraction interval setting unit according to the third embodiment of the invention.

FIG. 23 is a diagram illustrating the division of the time zone of the extraction interval setting unit according to the third embodiment of the invention.

FIG. 24 is a diagram illustrating the estimated channel impulse response value according to the third embodiment of the invention.

FIG. 25 is a diagram illustrating signals arriving at one wireless receiver from one wireless transmitter through a multipath environment.

FIG. 26 is a diagram illustrating, with respect to a multicarrier signal transmission/reception operation, subcarriers which are kept in an orthogonal relationship and subcarriers which are interfered with therebetween due to the ICI.

FIG. 27 is a diagram illustrating the relationship between the subcarriers and the orthogonal codes corresponding to the respective subcarriers in the MC-CDMA system.

FIG. 28 is a diagram illustrating codes when signals in the MC-CDMA system are propagated in the air and received by a wireless receiver.

Reference Symbols

1: S/P CONVERSION UNIT, 2-1 to 2-4: CODE-BY-CODE SIGNAL PROCESSING UNIT, 3: ERROR-CORRECTION CODING UNIT, 4: BIT INTERLEAVER UNIT, 5: MODULATOR UNIT, 6: SYMBOL INTERLEAVER UNIT, 7: FREQUENCY-TIME SPREADING UNIT, 8: DTCH MULTIPLEXING UNIT, 9: PICH MULTIPLEXING UNIT, 10: SCRAMBLING UNIT, 11: IFFT UNIT, 12: GI INSERTION UNIT, 21: SYMBOL SYNCHRONIZATION UNIT, 22: PROPAGATION CHANNEL AND NOISE POWER ESTIMATION UNIT, 23: MAP DETECTION UNIT, 24-1 to 24-4: CODE-BY-CODE MAP DECODER UNIT, 28: REPLICA SIGNAL GENERATING UNIT, 29-1 to 29-4: CODE-BY-CODE SYMBOL GENERATING UNIT, 30: BIT INTERLEAVER UNIT, 31: SYMBOL GENERATING UNIT, 32: SYMBOL INTERLEAVER UNIT, 33: FREQUENCY-TIME SPREADING UNIT, 34: DTCH MULTIPLEXING UNIT, 35: PICH MULTIPLEXING UNIT, 36: SCRAMBLING UNIT, 37: IFFT UNIT, 38: GI INSERTION UNIT, 39: P/S CONVERSION UNIT, 40: EXTRACTION INTERVAL SETTING UNIT, 41: delayed wave REPLICA GENERATING UNIT, 42: ADDER UNIT, 43: GI ELIMINATION UNIT, 44: FFT UNIT, 45-1 to 45-3: SOFT CANCELLER BLOCK UNIT, 46: MMSE FILTER UNIT, 47-1 to 47-4: CODE-BY-CODE LOGARITHMIC LIKELIHOOD RATIO OUTPUT UNIT, 48: DE-SPREADER UNIT, 49: SYMBOL DE-INTERLEAVER UNIT, 50: SOFT DECISION OUTPUT UNIT, 61: PROPAGATION CHANNEL ESTIMATION UNIT, 62: PREAMBLE REPLICA GENERATING UNIT, 63: NOISE POWER ESTIMATION UNIT, 70: MAC UNIT, 71: FILTER UNIT, 72: D/A CONVERSION UNIT, 73: FREQUENCY CONVERSION UNIT, 74: TRANSMISSION ANTENNA, 75: RECEPTION ANTENNA, 76: FREQUENCY CONVERSION UNIT, 77: A/D CONVERSION UNIT, 100: WIRELESS TRANSMITTER, 101: ARRIVING WAVE INTERVAL CALCULATING UNIT, 102: DIVISION NUMBER DETERMINING UNIT, 103: EXTRACTION TIME DETERMINING UNIT, 123: MAP DETECTION UNIT, 140: EXTRACTION INTERVAL SETTING UNIT, 141: delayed wave REPLICA GENERATING UNIT, 142: ADDER UNIT, 143: GI ELIMINATION UNIT, 144: FFT UNIT, 145-1 to 145-B: SOFT CANCELLER BLOCK UNIT, 146: MMSE FILTER UNIT, 147-1 to 147-4: CODE-BY-CODE LOGARITHMIC LIKELIHOOD RATIO OUTPUT UNIT, 148: DE-SPREADER UNIT, 149: SYMBOL DE-INTERLEAVER UNIT, 150: SOFT DECISION OUTPUT UNIT, 200: WIRELESS RECEIVER, 240: EXTRACTION INTERVAL SETTING UNIT, 223: MAP DETECTION UNIT.

BEST MODE FOR CARRYING OUT THE INVENTION

(First Embodiment)

In this embodiment, a wireless receiver will be described which can achieve excellent characteristics even in the presence of the ISI and the ICI caused by the delayed signals with delays exceeding a guard interval or the multicode interference caused by the frequency selectivity of propagation channels.

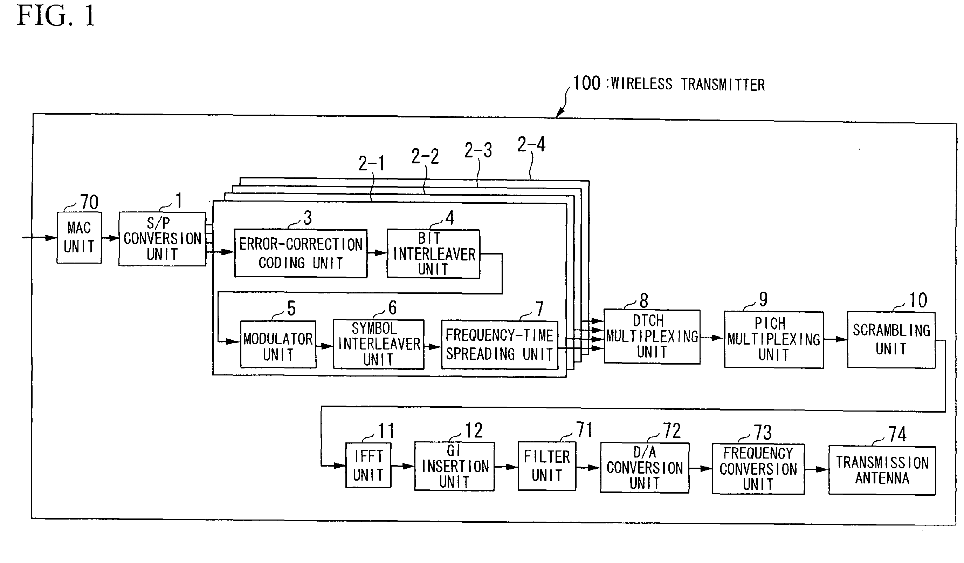

FIG. 1 is a block diagram schematically illustrating the configuration of the wireless transmitter 100 according to the first embodiment of the present invention. The wireless transmitter 100 is provided with a S/P (Serial/Parallel) conversion unit 1, a code-by-code signal processing units 2-1 to 2-4, a DTCH (Data Traffic Channel) multiplexing unit 8, a PICH (Pilot Channel) multiplexing unit 9, a scrambling unit 10, an IFFT (Inverse Fast Fourier Transform) unit 11, and a GI insertion unit 12. Each of the code-by-code signal processing units 2-1 to 2-4 is provided with an error-correction coding unit 3, a bit interleaver unit 4, a modulator unit 5, a symbol interleaver unit 6, and a frequency-time spreading unit 7.

Information signals output from a MAC (Media Access Control) unit 70 is input to the S/P conversion unit 1, and the outputs of the S/P conversion unit 1 which converts the signals in series form to be in a parallel form are input to the code-by-code signal processing units 2-1 to 2-4. Further, since the configurations of the code-by-code signal processing units 2-2 to 2-4 are identical to that of the code-by-code signal processing unit 2-1, the description of the code-by-code signal processing unit 2-1 will be described representatively.

The signal input to the code-by-code signal processing unit 2-1 is supplied to the error-correction coding unit 3 to be subjected to error-correction coding, such as turbo coding, LDPC (Low Density Parity Check) coding, or convolution coding. The output of the error-correction coding unit 3 is supplied to the bit interleaver unit 4 to be subjected to exchanging of the bit-by-bit order to be an order suitable for improving burst error which is caused by the decrease in reception power resulting from the frequency selective fading.

The output of the bit interleaver unit 4 is supplied to the modulator unit 5 to be subjected to a symbol modulation process such as BPSK (Binary Phase Shift Keying), QPSK (Quadrature Phase Shift Keying), 16QAM (16 Quadrature Amplitude Modulation), or 64QAM (64 Quadrature Amplitude Modulation). The output of the modulator unit 5 is supplied to the symbol interleaver unit 6 in which the order of the symbols is changed to be an order suitable for improving the burst error. The output of the symbol interleaver unit 6 is supplied to the frequency-time spreading unit 7 in which the output is spread with a predetermined spreading code (channelization code). Here, an OVSF (Orthogonal Variable Spread Factor) code is employed as the spreading code, but other types of spreading code may be used as well.

Further, the wireless transmitter 100 is provided with the code-by-code signal processing units by the number of code multiplexing $C_{mux}$ ($C_{mux}$ is a natural number equal to or more than 1). Here, the wireless transmitter is illustrated to include the code-by-code signal processing units 2-1 to 2-4, that is, $C_{mux}$=4. The signals spread with different spreading codes are output as the outputs of the code-by-code signal processing units 2-1 to 2-4, and multiplexed (addition) by the DTCH multiplexing unit 8. Then, in the PICH multiplexing unit 9, a pilot channel PICH which is used for the propagation channel estimation is inserted at a predetermined position (time multiplexing).

Thereafter, the output from the PICH multiplexing unit is supplied to the scrambling unit 10 to be subjected to scrambling with a scrambling code unique to the base station. The output from the scrambling unit is supplied to the IFFT unit 11 to be subjected to the frequency-to-time conversion. The output from the IFFT unit is supplied to the GI insertion unit 12 in which the guard interval GI is inserted therein, and is subjected to a filtering process by the filter unit 71, a digital-analog conversion process by the D/A (Digital/Analog) conversion unit 72, and a frequency conversion process by the frequency conversion unit 73, and then transmitted to the wireless receiver 200 from the transmission antenna 74 as a transmission signal.

In FIG. 1, both the bit interleaver unit 4 and the symbol interleaver unit 6 are disposed on the code-by-code single processing units 2-1 to 2-4, but any one of these units may be disposed.

In addition, both the bit interleaver unit 4 and the symbol interleaver unit 6 may not be disposed on the code-by-code signal processing units 2-1 to 2-4.

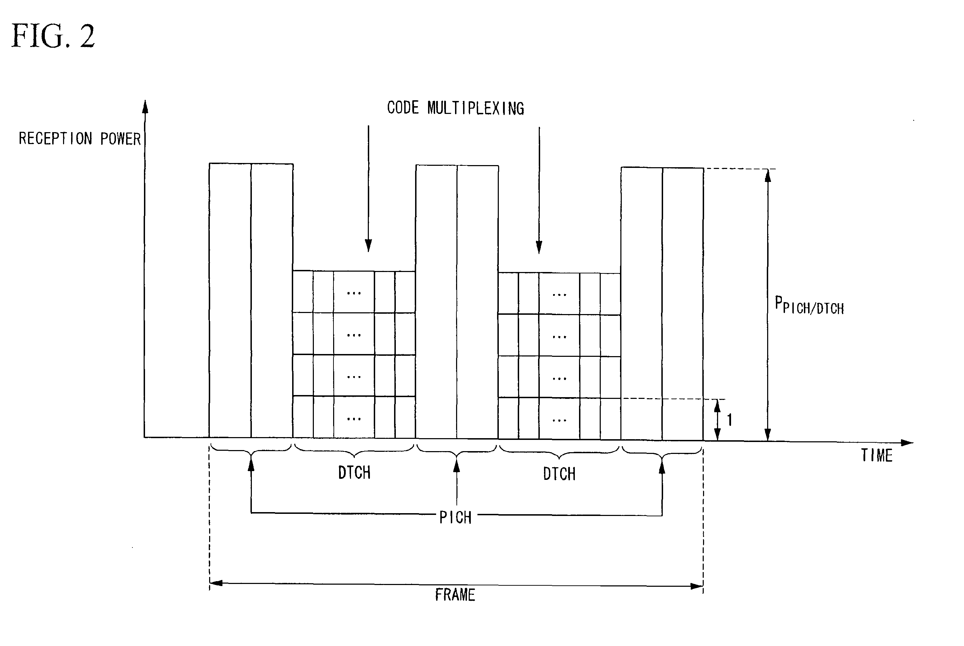

FIG. 2 is a diagram illustrating an example of the frame format according to the first embodiment of the invention. The drawing shows a frame format of the multicarrier signals which are transmitted from the wireless transmitter 100 to the wireless receiver 200. In FIG. 2, the lapse of time is shown along the horizontal axis, and the reception power is shown along the vertical axis. As shown in the drawing, the pilot channel PICH is disposed at the front, the back, and the center of the frame. The data channel DTCH for data transmission is disposed in the first half and in the second half of the frame, in which the signals spread with different $C_{mux}$ spreading codes are code-multiplexed. Here, the case of $C_{mux}$=4 is schematically illustrated as four stacked data. In addition, the ratio of the reception power in the pilot channel PICH to the reception power of the data channel DTCH per one code is shown as $P_{PICH/DTCH}$. Further, FIG. 2 shows the case where the pilot channel PICH is disposed at the front, the back, and the center of the frame, but the configuration is not limited as long as a propagation channel estimation value, which is used to carry out a demodulating process and a decoding process on the data channel DTCH, can be calculated.

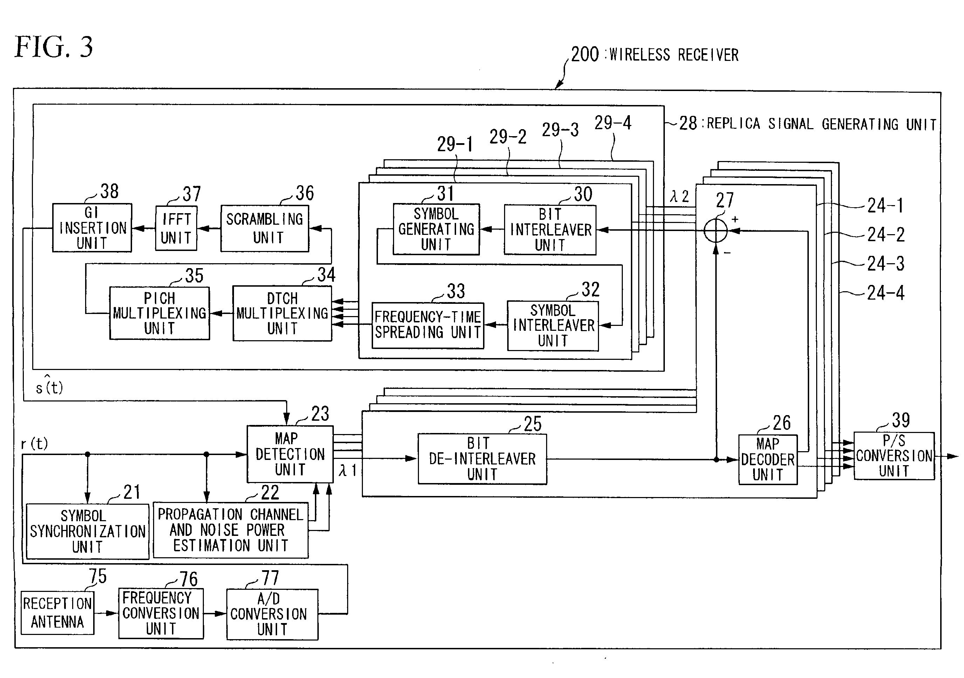

FIG. 3 is a block diagram schematically illustrating the configuration of the wireless receiver 200 according to the first embodiment of the invention. The wireless receiver 200 is provided with a symbol synchronization unit 21, a propagation channel and noise power estimation unit 22, a MAP detection unit 23, code-by-code MAP decoder units 24-1 to 24-4, a replica signal generating unit 28, and a P/S (Parallel/Serial) conversion unit 39.

The replica signal generating unit 28 is provided with code-by-code replica generating units 29-1 to 29-4, a DTCH multiplexing unit 34, a PICH multiplexing unit 35, a scrambling unit 36, an IFFT unit 37, and a GI insertion unit 38. The replica signal generating unit 28 generates a replica signal which is a replica of the transmission signal based on the received signal r(t). More specifically, the replica signal generating unit 28 generates a replica signal which is a replica of the transmission signal based on a logarithmic likelihood ratio calculated by the MAP decoder unit 26.

In addition, each of the code-by-code replica generating units 29-1 to 29-4 is provided with a bit interleaver unit 30, a symbol generating unit 31, a symbol interleaver unit 32, and a frequency-time spreading unit 33. In addition, each of the code-by-code MAP decoder units 24-1 to 24-4 is provided with a bit de-interleaver unit 25, a MAP decoder unit 26 (which is also referred to as a decoding unit), and an adder unit 27.

The received signal received by the reception antenna 75 is subjected to a frequency conversion process by the frequency conversion unit 76, the analog-digital conversion process by the A/D (Analog/Digital) conversion unit 77, and then the received signal as the digital received signal r(t) is subjected to symbol synchronization by the symbol synchronization unit 21. The symbol synchronization unit 21 carries out the symbol synchronization using a correlation characteristic between the guard interval GI and the effective signal interval or the like, and carries out the subsequent signal processes based on the result.

Then, the propagation channel and noise power estimation unit 22 estimates the channel impulse response or an estimated noise power value using the pilot channel PICH. The propagation channel estimation can be carried out through various methods, such as generating a replica signal of the pilot channel PICH followed by subjecting the replica signal to RSL (Recursive Least Squares) algorithm to minimize the square error of the absolute value thereof, or determining cross-correlation between the received signal and the replica signal of the pilot channel PICH on the time axis or the frequency axis, but the invention is not limited thereto.

In addition, the noise power estimation can also be carried out through a method in which the replica of the pilot channel PICH is generated by using the channel impulse response estimated from the received pilot channel PICH and a difference therebetween provides the estimated noise power, but the invention is not limited thereto.

The channel impulse response and the estimated noise power value output from the propagation channel and noise power estimation unit 22 are input to the MAP detection unit 23 (employing a maximum a posteriori probability (MAP) detector and an MAP decoding method), and are used to calculate the bit-by-bit logarithmic likelihood ratio.

The MAP detection unit 23 outputs the bit-by-bit logarithmic likelihood ratio using the received signal, the channel impulse response, and the estimated noise power value in the first-round detection operation. The logarithmic likelihood ratio is a value indicating that a received bit is likely to be 0 or 1, and is calculated based on a bit error rate of the communication channel. In FIG. 3, four outputs are provided to the respective code-by-code MAP decoder units 24-1 to 24-4, which respectively provide logarithmic likelihood ratios assigned on the spreading codes different from each other. When the code multiplexing is carried out using $C_{mux}$ different spreading codes, the $C_{mux}$ outputs are provided to the code-by-code MAP decoder units 24-1 to 24- $C_{mux}$.

In addition, in the repetition to be described later, the bit-by-bit logarithmic likelihood ratio is output using the received signal, the replica signal obtained as the demodulation result, the channel impulse response, and the estimated noise power value.

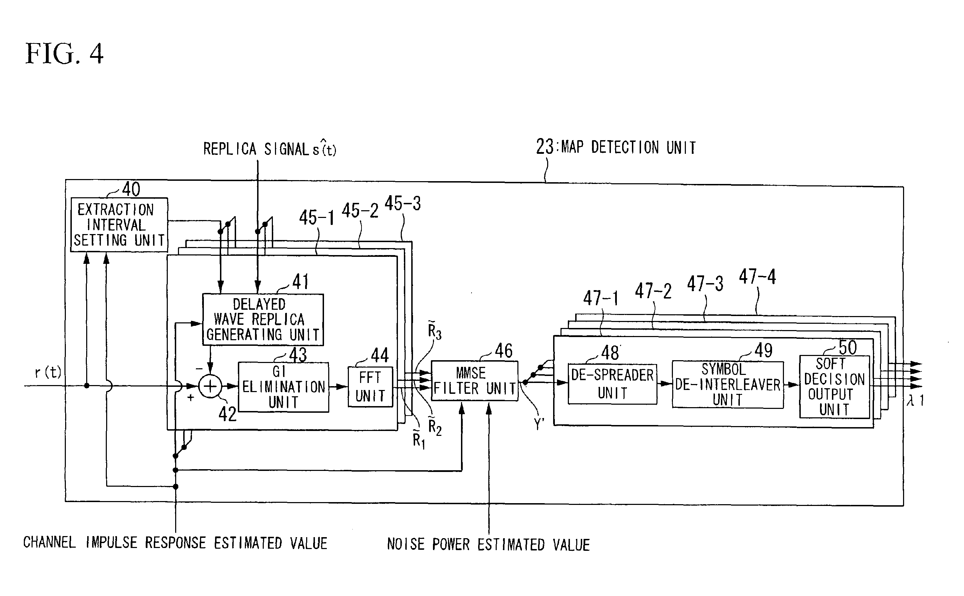

Then, each of the code-by-code MAP decoder units 24-1 to 24-4 carries out a de-interleaving process on the input signal for each bit in the bit de-interleaver unit 25. The de-interleaving process is a process for carrying out the interleaving process inversely so as to restore the order of bits by the interleaving process to the original order. The MAP decoder unit 26 carries out a MAP decoding process on the output of the bit de-interleaver unit 25. Specifically, the MAP decoder unit 26 carries out an error-correction decoding based on the result from the soft decision carried out by a soft decision output unit 50 (see FIG. 4, which will be described later) of the MAP detection unit 23, and calculates a bit-by-bit logarithmic likelihood ratio.

In addition, the MMSE filter unit 46 (see FIG. 4) combines the output signals of the soft canceller units 45-1 to 45-3. The MAP decoder unit 26 obtains the combined signal via the code-by-code logarithmic likelihood ratio output units 47-1 to 47-4 (see FIG. 4) and the bit de-interleaver unit 25, and carries out a decoding process on the signal to be output to the P/S conversion unit 39.

Further, it is to be noted here that the MAP decoding process is a method of outputting a soft decision result such as a logarithmic likelihood ratio including information bits and parity bits, without carrying out a hard decision at the time of the ordinary error-correction decoding such as turbo decoding, LDPC decoding, and Viterbi decoding. In other words, in contrast to the hard decision in which a received signal is recognized only as 0 or 1, the soft decision carries out a decision based on information indicative of how likely it is to be correct (soft decision information).

Then, the adder unit 27 calculates the decoding result λ2 which is the difference between the input to the MAP decoder unit 26 and the output from the MAP decoder unit 26, and provides its output to the replica signal generating unit 28.

The input to the replica signal generating unit 28 is provided to the bit interleaver unit 30. The bit interleaver unit 30 interchanges the decoding result λ2 on a bit by bit basis. The output of the bit interleaver unit 30 is subjected at the symbol generating unit 31 to symbol modulation with a modulation system identical to the wireless transmitter 100 (such as BPSK, QPSK, 16QAM and 64QAM), with the decoding result λ2 taken into account. The output from the symbol generating unit 31 is subjected at the symbol interleaver unit 32 to interchange in the order of symbols, and the output of the symbol interleaver 32 is spread at the frequency-time spreading unit 33 with a predetermined spreading code.

Further, the wireless transmitter 200 is provided with a plurality of code-by-code MAP decoder units and code-by-code symbol generating units by the number $C_{mux}$ of code multiplexing. Here, the number $C_{mux}$ is equal to 4. The signals spread with mutually different spreading codes are output from the code-by-code replica generating units 29-1 to 29-4 so as to be multiplexed (addition) by the DTCH multiplexing unit 34. Then, the PICH multiplexing unit 35 inserts (time multiplexed) the pilot channel PICH used for estimating a propagation channel at a predetermined position. Thereafter, the output of the PICH multiplexing unit is subjected at the scrambling unit 36 to scrambling with a scrambling code unique to the base station. The scrambled output from the scrambling unit is frequency-to-time converted at the IFFT unit 37 of which output is provided to the GI insertion unit 38 for inserting the guard interval GI, and is output to the MAP detection unit 23 to be used in the signal processing in the repetition.

Further, after the above-mentioned decoding operation is repeatedly carried out a predetermined number of times, the output of the MAP decoder unit 26 is provided to the P/S conversion unit 39 for parallel-to-serial converting and then output to a MAC unit (not shown) as a demodulation result.

FIG. 4 is a diagram illustrating an example of the configuration of the MAP detection unit 23 (see FIG. 3) according to the first embodiment of the invention. The MAP detection unit 23 is provided with an extraction interval setting unit 40 (also referred to as a time zone setting unit), soft canceller block units 45-1 to 45-3, the MMSE (minimum mean square error) filter unit 46 (also referred to as a combination unit), and code-by-code logarithmic likelihood ratio output units 47-1 to 47-4.

Each of the soft canceller block units 45-1 to 45-3 is provided with a delayed wave replica generating unit 41, an adder unit 42 (also referred to as a subtractor unit), the GI elimination unit 43, and the FFT unit 44. Each of the soft canceller block units 45-1 to 45-3 (also referred to as signal extracting units) extracts signals in a predetermined time zone of the received signal r(t) based on the replica signal and the time zone set by the extraction interval setting unit 40. In other words, each of the soft canceller block units 45-1 to 45-3 removes the undesired signal components from the received signal r(t) using the replica signal generated by the replica signal generating unit 28, and extracts the desired signal component in a predetermined time zone of each of the soft canceller block units.

The extraction interval setting unit 40 sets a plurality of time zones such that a portion of the signal intervals of the received signal r(t) is included in a plurality of time zones to be extracted, and outputs the setting result to the delayed wave replica generating unit 41. In other words, the extraction interval setting unit 40 maintains a predetermined reference interval width which is set in reference time information as a time zone to be extracted by each of the soft canceller block units 45-1 to 45-3, and calculates a signal interval in which the respective time zones are overlapped with each other so as to be output to the delayed wave replica generating unit 41 of each of the soft canceller block units 45-1 to 45-3.

The delayed wave replica generating unit 41 generates replicas of the delayed signals (including signals arriving first, which is also true in the following description) which are not included in the time zone of the desired signal interval among the received signal r(t) based on the channel impulse response estimated from the received signal r(t) for a propagation channel, a replica signal $s^{\wedge}(t)$ generated by the replica signal generating unit 28 (see FIG. 3), and the time zone set by the extraction interval setting unit 40.

The adder unit 42 subtracts the delayed wave replica generated by the delay signal replica generating unit 41 from the received signal r(t) so as to extract the desired signal component in a predetermined time zone.

Each of the code-by-code logarithmic likelihood ratio output units 47-1 to 47-4 is provided with a de-spreader unit 48, a symbol de-interleaver unit 49, and a soft decision output unit 50.

The adder unit 42 calculates a difference between the received signal r(t) input to the MAP detection unit 23 and the output of the delayed wave replica generating unit 41 which is obtained based on the replica signal $s^{\wedge}(t)$ and the channel impulse response estimated value $h^{\sim}(t)$ input to the MAP detection unit 23, and outputs the difference to the GI elimination unit 43. The output of the adder unit is eliminated from the guard interval GI by the GI elimination unit 43 and output to the FFT unit 44. The FFT unit 44 carries out the time-to-frequency conversion on the input signal so as to obtain signals $R^{\sim}_1$, $R^{\sim}_2$, and $R^{\sim}_3$.

Then, the MMSE filter unit 46 combines the signal components in the respective time zones of the respective soft canceller block units 45-1 to 45-3 which are extracted by removing the undesired signal components in the soft canceller block units 45-1 to 45-3. Specifically, the MMSE filter unit 46 carries out the MMSE filtering process using the outputs $R^{\sim}_1$, $R^{\sim}_2$, and $R^{\sim}_3$ of the soft canceller block units 45-1 to 45-3, the estimated channel impulse response value, and the estimated noise power value so as to obtain a signal Y'.

The code-by-code logarithmic likelihood ratio output units 47-1 to 47-4 equal in number to $C_{mux}$ (here, $C_{mux}=4$) use the signal Y' to output the bit-by-bit logarithmic likelihood ratio for each of the codes.

Each of the de-spreader units 48 carries out a despreading process using each spreading code. The symbol de-interleaver unit 49 interchanges the order of the symbols of the output from the despreading unit 48. The soft decision output unit 50 carries out the soft decision on the signal combined by the MMSE filter unit 46. The soft decision output unit 50 outputs the bit-by-bit logarithmic likelihood ratio λ1 as the soft decision result in response to the symbol de-interleaver output.

The soft decision output unit 50 calculates the logarithmic likelihood ratio λ1 using the following equations (1) to (3). In other words, the soft decision result λ1 for QPSK modulation can be expressed by equations (1) and (2) below, assuming that the output of the symbol de-interleaver unit 49 for the n-th symbol is Zn:

$$\lambda1(b0) = \frac{2R[Zn]}{\sqrt{2}\left[1-\mu(n)\right]} \quad \cdot\cdot\cdot \quad (1)$$

$$\lambda 1(b1) = \frac{2\operatorname{Im}[Zn]}{\sqrt{2}\left[1 - \mu(n)\right]} \quad \cdots \quad (2)$$

where, R[] denotes a real part for the component in the brackets, Im[] denotes an imaginary part of the component in the brackets, and $\mu(n)$ denotes a reference symbol (amplitude of the pilot signal) for n symbols. Further, the modulation signal Zn can be expressed by equation (3) below:

$$Zn = \frac{1}{\sqrt{2}}(b0 + jb1) \quad \cdots \quad (3)$$

Here, the modulation is exemplified as the QPSK modulation, but the bit-by-bit soft decision result (logarithmic likelihood ratio) $\lambda 1$ can be obtained in other types of modulation as well.

In FIGS. 3 and 4, there are arranged both the bit interleaver unit 30 and the bit de-interleaver unit 25, and the symbol interleaver unit 32 and the symbol de-interleaver unit 49, but one of them, that is, either the bit interleaver unit 30 and the bit de-interleaver unit 25, or the symbol interleaver unit 32 and the symbol de-interleaver unit 49 may be sufficient according to the bit interleaver unit and the symbol interleaver unit which are provided at the transmitter. In addition, not all of the bit interleaver unit 30, the bit de-interleaver unit 25, the symbol interleaver unit 32, and the symbol de-interleaver unit 49 need to be provided.

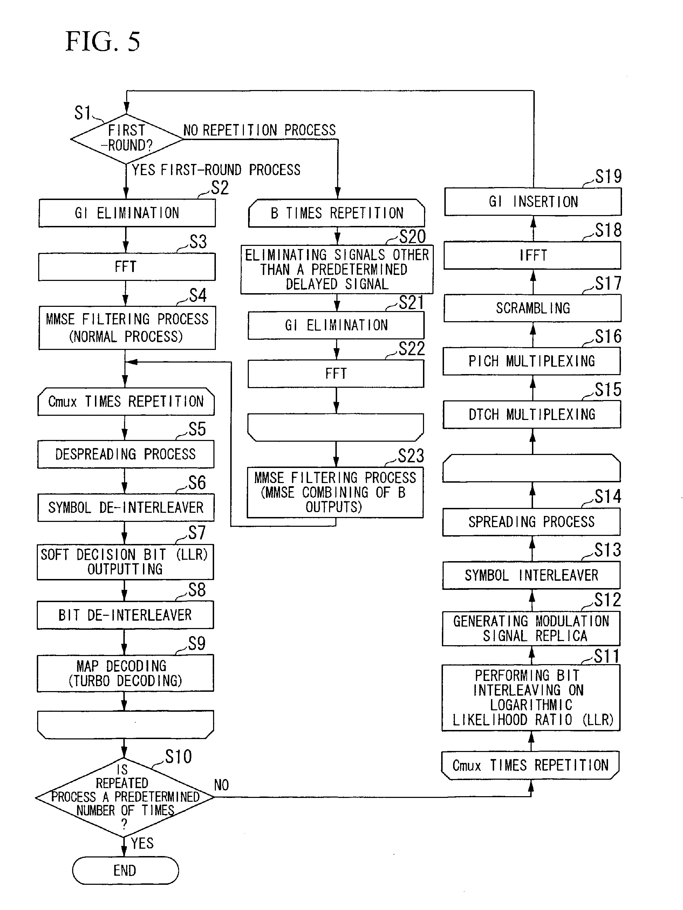

FIG. 5 is a flowchart illustrating an example of the operation of the wireless receiver 200 according to the first embodiment of the invention. The MAP detection unit 23 determines whether the operation is a first-round or not (step S1). When it is determined that the operation is the first-round operation in step S1, the GI elimination unit 43 eliminates the guard interval GI from the received signal r(t) (step S2). Then, the FFT unit 44 carries out a Fast Fourier Transform process (time-to-frequency converting process) (step S3). Next, the MMSE filter unit 46 carries out an ordinary MMSE filtering process (step S4).

Then, the de-spreader unit 48 carries out the despreading process (step S5). Next, the symbol de-interleaver unit 49 carries out the symbol de-interleaver process (step S6). Then, the soft decision output unit 50 carries out a soft decision bit outputting process (step S7). Next, the bit de-interleaver unit 25 carries out a bit de-interleaver process (step S8). Then, the MAP decoder unit 26 carries out the MAP decoding process (step S9). Next, after the processes S5 to S9 described above are repeatedly carried out $C_{mux}$ times, it is determined whether or not the decoding process is repeatedly carried out a predetermined number of times (whether or not the code-by-code MAP decoder unit outputs the decoding result $\lambda 2$ a predetermined number of times) (step S10). Further, as shown in FIG. 3, the processes may be carried out by $C_{mux}$ circuits arranged in parallel. Further, the first-round MMSE filtering process will be described later.

When it is determined in step S10 that the processes from step S1 to step S19 (S11 to S19 will be described later) are repeatedly carried out a predetermined number of times, the bit interleaver unit 30 carries out bit interleaving on the logarithmic likelihood ratio using the decoding result $\lambda 2$ for $C_{mux}$ codes (step S11). Then, the symbol generating unit 31 generates a replica of the modulation signal (step S12). Next, the symbol interleaver unit 32 carries out a symbol interleaving process (step S13). Then, the frequency-time spreader unit 33 carries out a spreading process using a predetermined spreading code (step S14).

After the above-mentioned processes of steps S11 to S14 are repeatedly carried out $C_{mux}$ times, the DTCH multiplexing unit 34 carries out DTCH multiplexing (step S15). Then, the PICH multiplexing unit 35 carries out the pilot PICH multiplexing (step S16). Next, the scrambling unit 36 carries out a scrambling process (step S17). Then, the IFFT unit 37 carries out the inverse Fast Fourier Transform process (step S18). Next, the GI insertion unit 38 inserts the guard interval IG (step S19). The GI-inserted signal in step S19 is used for the repetition of the demodulating operation as a replica signal.

When it is determined in step S1 that the operation is not a first-round operation but a repetition operation, the soft canceller block units 45-1 to 45-3 eliminate the signals other than a predetermined delayed wave component (including a direct signal) on a block by block basis (step S20). Then, the GI elimination unit 43 carries out the GI elimination process (step S21). Next, the FFT unit 44 carries out a Fast Fourier Transform process (step S22). After the above-mentioned processes of from step S20 to step S22 are carried out for B blocks (B is a natural number larger than 1), the MMSE filter unit 46 carries out the minimum mean square error-based combination of the output signals from the B blocks by the MMSE filter. In other words, the MMSE filtering process is carried out (step 23). Further, subsequently to step 23, the procedure proceeds to step S5, and a process similar to the first-round operation is carried out.

In step S10, the processes of steps S1 to S9 and S11 to S23 are repeatedly carried out until the above-mentioned processes are repeatedly carried out a predetermined number of times.

Next, the process carried out at the soft canceller block units 45-1 to 45-3 of the MAP detection unit 23 shown in FIG. 4 will be described in detail.

As shown in FIG. 4, the extraction interval setting unit 40 sets the signal intervals to be extracted by each of the soft canceller block units 45-1 to 45-3 such that a predetermined reference interval width set in reference time information is maintained and the respective signal intervals are overlapped with each other. By setting the signal intervals to be extracted such that the respective signal intervals are overlapped with each other, each of the signal intervals to be extracted can be satisfied with a predetermined reference time width and be set in an interval in which the average arriving wave exists along the reference time width. Alternatively, by setting the signal intervals to be extracted such that the respective signal intervals are overlapped with each other, each of the signal intervals to be extracted can be satisfied with a predetermined reference time width and increased signal power in the signal interval to be extracted. The reference time information may be known to the receiver in advance or may be notified by a received signal by control information of the received signal.

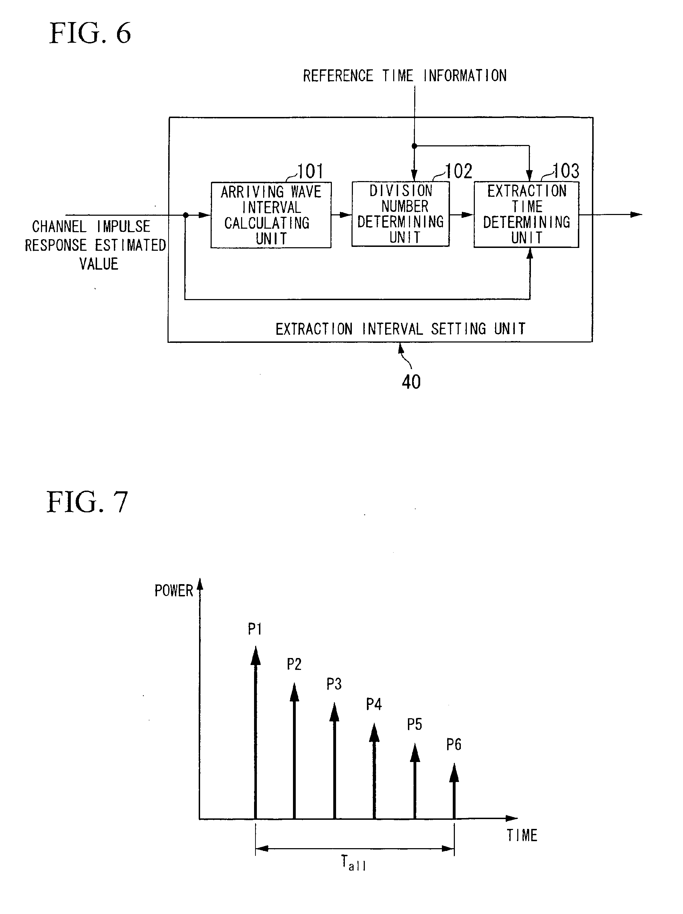

FIG. 6 is a block diagram illustrating the configuration of the extraction interval setting unit 40 according to the first embodiment of the invention. As shown in FIG. 6, the extraction interval setting unit 40 is provided with an arriving wave interval calculating unit 101, a division number determining unit 102, and an extraction time determining unit 103.

The arriving wave interval calculating unit 101 calculates an estimated interval of the delayed wave which arrives from the estimated impulse response value as the estimated propagation channel value. For example, as shown in FIG. 7, it is assumed that the 6 delayed signals P1 to P6 are estimated to arrive from the estimated channel impulse response value. Further, in FIG. 7, the lapse of time is shown along the horizontal axis, and the power is shown along the vertical axis. In this case, an interval $T_{all}$ from the first signal to arrive to the last signal to arrive is calculated as an estimated interval of the delayed wave to arrive.

The division number determining unit 102 calculates a division number based on the output from the arriving wave interval calculating unit 101 and the predetermined reference time information set in advance. Specifically, assuming that the predetermined reference time information is $T_b$, the division number B is calculated by equation (3') below:

$$B = \left\lceil \frac{T_{all}}{T_b} \right\rceil \qquad \cdots \quad (3')$$

In this case,
**[0080]**

$$\left\lceil x \right\rceil$$

shows that rounding is carried out when x is not dividable.

Here, as an example, the division number B is calculated using equation (3') described above, but it is not limited thereto as long as it is satisfied when $T_{all}=nT_b$, $B \geq n$, and when $T_{all}>nT_b+m$ (here, n>m), $B \geq n+1$.

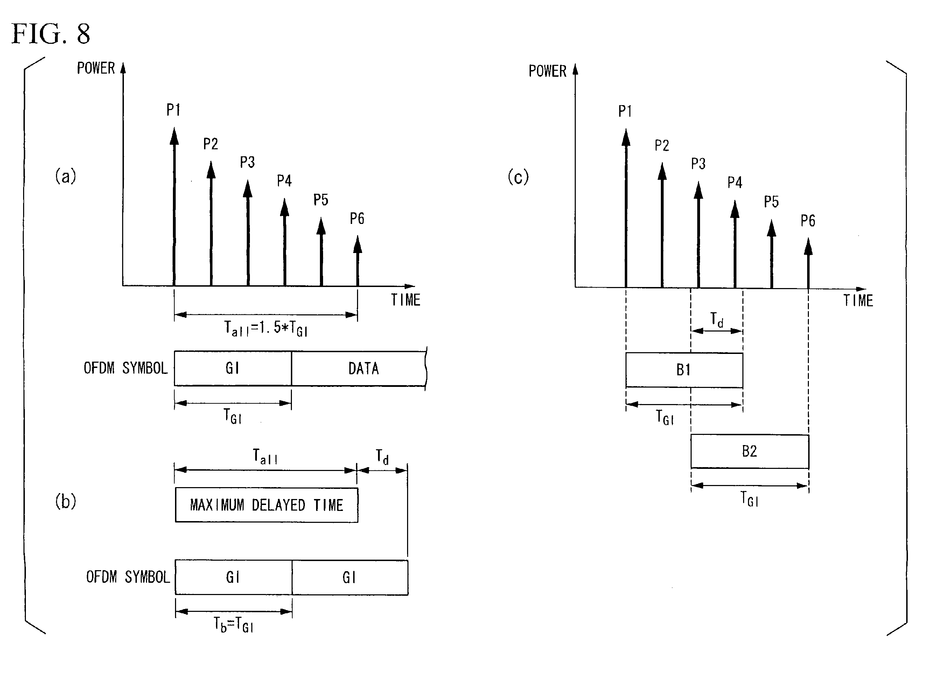

As an example of the division number determination, FIG. 8(a) shows an example when the predetermined reference time $T_b$ is a guard interval (GI) length $T_{GI}$. When the estimated interval $T_{all}$ of the delayed wave to arrive corresponds to 1.5 times the reference time $T_{GI}$ of the GI length, the division number is calculated in accordance with equation described above so as to obtain the division number as B=2.

Here, the GI length is used as the reference time information as an example, but the invention is not limited thereto. An interval in which a signal-to-interference plus noise power ratio (SINR) becomes larger may be set as the reference time. The reference time may be set based on reception power higher than a predetermined error rate characteristic.

Based on the division number B, the reference time information, and the impulse response estimated value, the extraction time determining unit 103 sets the signal interval of each of the respective soft canceller block units 45-1 to 45-3 to an interval in which a predetermined reference time width is satisfied and an average arriving wave exists along the reference time width (an interval is set such that the arriving wave is not inclined to a part in the reference time width), and provides the interval as an input to the soft canceller block units 45-1 to 45-3.

Next, an example of setting the signal interval will be described using FIG. 8(a) to FIG. 8(c). As shown in FIG. 8(a), the GI length is $T_{GI}$, the delayed signals of P1 to P6 arrive, the time $T_{all}$ of the estimated intervals of the delayed signals which arrive is set to 1.5 times of the GI length $T_{GI}$.

The extraction interval setting unit 40 sets a plurality of time zones from the total time $B^* T_{GI}$ of the plurality of time zones $T_{GI}$ to be extracted using equation (3 ") below, such that the time length in which the signal interval $T_{all}$ as the estimated interval length of the delayed wave of the received signal becomes the signal interval $T_d$ included in the plurality of time zones to be extracted. FIG. 8(b) shows the case where the division number B=2 and the signal interval $T_d$.

$$T_d = B^*T_b - T_{all} = B^*T_{GI} - T_{all} \ \ldots \ (3")$$

Next, the signal intervals of the respective soft canceller block units 45-1 to 45-3 are determined so as to be overlapped with the signal interval $T_d$. FIG. 8(c) shows the case where the division number B=2, the time zone B1 and the time zone B2 of a predetermined reference time $T_{GI}$ are the intervals extracted by two soft canceller block units. As shown in FIG. 8(c), with the extraction interval setting unit 40 according to this embodiment, the plurality of time zones B1 and B2 is set such that the signal interval $T_d$ of a part of the received signals P1 to P6 is included in the plurality of time zones B1 and B2 to be extracted. By carrying out the process, the time zone B1 and the time zone B2 become the intervals which are overlapped with each other by the signal interval $T_d$ in the center. The signal interval $T_d$ is included in both intervals of the time zone B1 and the time zone B2.

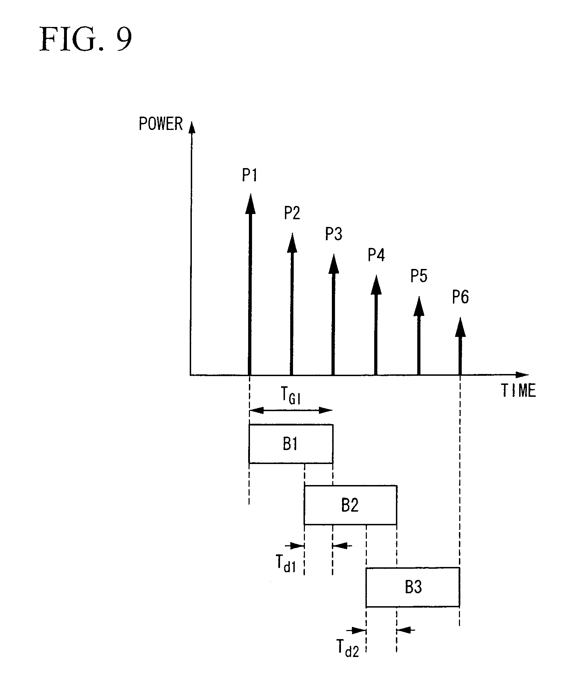

FIG. 9 shows an example of setting the signal interval when the division number B=3. When the signal intervals in a predetermined reference time to be extracted by three soft canceller block units 45-1 to 45-3 are assumed to be the time zones B1, B2, and B3, the time zone B1 and the time zone B2 are overlapped with each other in the signal interval $T_{d1}$, and the time zone B2 and the time zone B3 are overlapped with each other in the signal interval $T_{d2}$, and $T_d = T_{d1} + T_{d2}$.

The delayed wave replica generating unit 41 (see FIG. 4) belonging to each of the soft canceller block units 45-1 to 45-3 generates a delayed wave replica for extracting a signal in the time zone of the set signal interval based on the estimated channel impulse response value and the replica signal $s^{\wedge}(t)$ generated by the replica signal generating unit 28.

For example, as shown in FIG. 9, the extraction interval setting unit 40 determines the time zones B1, B2, and B3, and the time zones B1, B2, and B3 are input to the soft canceller block units 45-1 to 45-3 from the extraction interval setting unit 40. In this case, the delayed wave replica generating unit 41 belonging to the soft canceller block unit 45-1 of the time zone B1 carries out a convolution operation of the estimated impulse response value $h_1(t)$ corresponding to the delayed signals P4 to P6 and the replica signal $s^{\wedge}(t)$, and provides the resultant value as an output. Similarly, the delayed wave replica generating unit 41 belonging to the soft canceller block unit 45-2 of the time zone B2 carries out a convolution operation of the impulse response $h_2(t)$ corresponding to the delayed signals P1, P2, P5, and P6 and the replica signal $s^{\wedge}(t)$, and provides the resultant value as an output. The delayed wave replica generating unit 41 belonging to the soft canceller block unit 45-3 of the time zone B3 carries out a convolution operation of the impulse response $h_3(t)$ corresponding to the delayed signals P1 to P3 and the replica signal $s^{\wedge}(t)$, and provides the resultant value as an output.

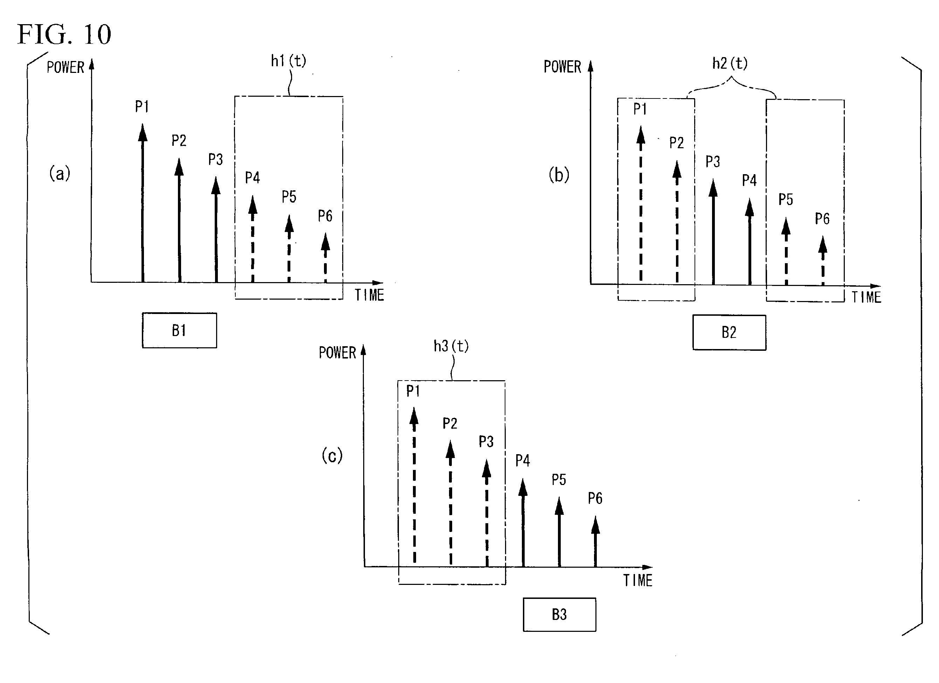

FIG. 10(a) to FIG. 10(c) show the delayed signals which are eliminated by the respective soft canceller block units 45-1 to 45-3 based on the set signal interval as described above. In the drawing, the delayed signals surrounded by a chain line show the replicas in which undesired signal components are eliminated and which are generated when the desired signal components are extracted.

The adder unit 42 of the soft canceller block unit 45-1 subtracts the resultant value of the convolution operation of the impulse response $h_1(t)$ and the replica signal $s^{\wedge}(t)$ from the received signal r(t). When the replica is correctly generated, the output of the adder unit 42 of the soft canceller block unit 45-1 can be considered as the signal received via the propagation channel expressed by $(h(t) - h_1(t))$, and the signal components of the time zone B1 are extracted from the adder unit 42.

The adder unit 42 of the soft canceller block unit 45-2 subtracts the resultant value of the convolution operation of the impulse response $h_2(t)$ and the replica signal $s^{\wedge}(t)$ from the received signal r(t). When the replica is correctly generated, the output of the adder unit 42 can be considered as the signal received via the propagation channel expressed by $(h(t) - h_2(t))$, and the signal components of the time zone B2 are extracted from the adder unit 42.

Similarly, the adder unit 42 of the soft canceller block unit 45-3 subtracts the resultant value of the convolution operation of the impulse response $h_3(t)$ and the replica signal $s^{\wedge}(t)$ from the received signal r(t). When the replica is correctly generated, the output of the adder unit 42 can be considered as the signal received via the propagation channel expressed by (h(t) - $h_3$(t)), and the signal components of the time zone B3 are extracted from the adder unit 42.

As described above, since the signal intervals of the signals extracted by each of the soft canceller block units 45-1 to 45-3 are set such that a predetermined reference interval width is maintained and the respective signal intervals are overlapped with each other, the probability of generating the signal interval in which the signal power in the interval or the SINR is extremely reduced can be lowered. Further, since a predetermined reference interval width can be maintained, the probability of generating a signal interval in which elimination residual error caused when the replica is subtracted from the received signal is extremely increased is lowered.

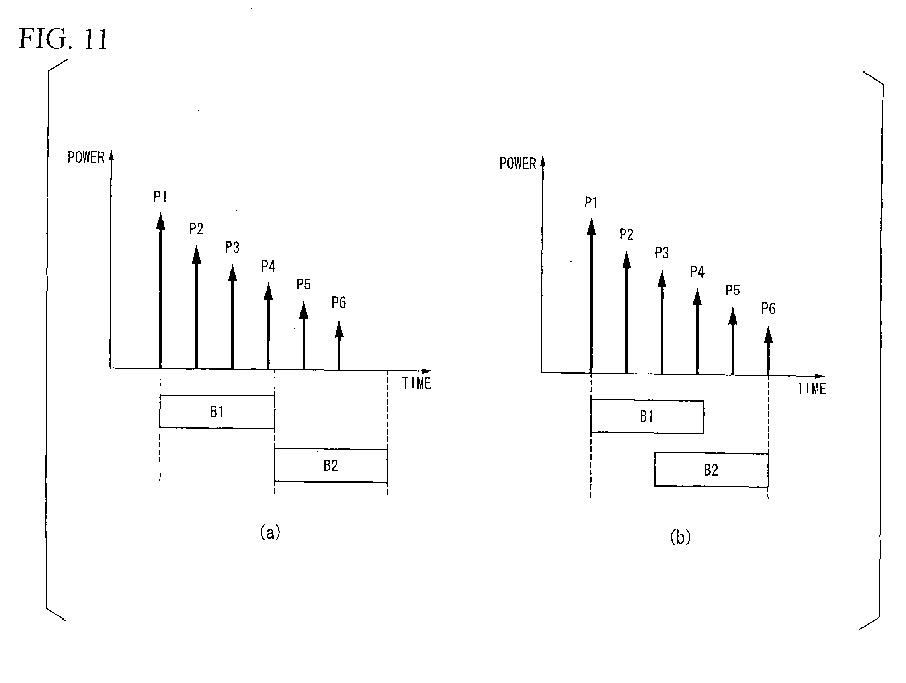

For example, as shown in FIG. 11 (a), when the delayed signals attenuated in an exponential manner arrive, if the time zones B1 and B2 to be extracted by the soft canceller block units 45-1 to 45-3 are divided without overlapping the signals sequentially from the first arriving wave, the power of the delayed signals P5 and P6 belonging to the time zone B2 becomes smaller, so that the SINR of the time zone B2 is reduced. Further, it is assumed that the number of the delayed wave replicas generated to extract the time zone B2 is four P1 to P4. As the number of the signal replicas to be generated is increased, the residual error generated after the replica is eliminated from the received signal is increases.

On the other hand, as shown in FIG. 11 (b), by using the extraction reference of this embodiment, the overlapping signal intervals are set, the number of the delayed signals belonging to the time zone B2 becomes P3 to P6, and the power can be increased. Further, since the delayed replica which is generated to extract the time zone B1 or the time zone B2 includes two paths and the number of signals can be reduced compared with the case of division without overlapping (when the time zone B1 is extracted, two replicas of the delayed signals P5 and P6 are generated, when the time zone B2 is extracted, two replicas of the delayed signals P1 and P2 are generated), the residual error after eliminating the replica from the received signal can be reduced. Therefore, the degradation in the characteristics caused by an interval with an extremely low signal power and a large elimination residual error can be suppressed.

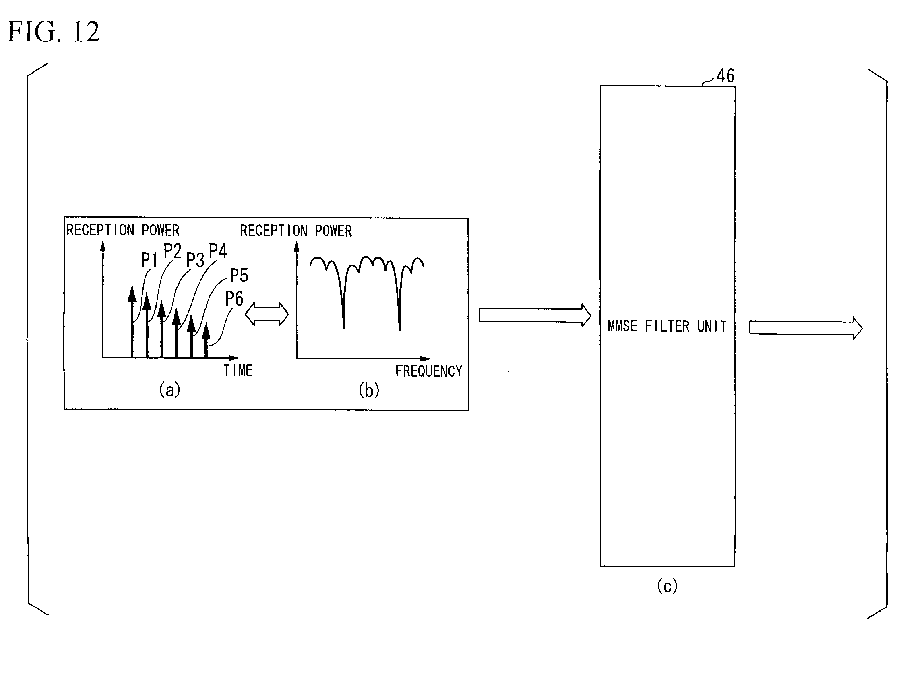

Next, the MMSE filter unit 46 shown in FIG. 4 will be described. FIG. 12(a) to FIG. 12(c) are diagrams illustrating the estimated channel impulse response value in the initial process and the MMSE filter unit according to the first embodiment of the invention. Here, the MMSE filter unit 46 shown in FIG. 4 and the operation of step S4 and step S23 shown in FIG. 5 will be described.

First, the first-round operation of the MMSE filter unit 46 will be described. When the received signal is expressed in the frequency domain, the received signal R can be expressed by equation (4) below:

$$R = \hat{H}S + N \quad \cdot \cdot \cdot \quad (4)$$

where, $H^\wedge$ denotes the transfer function for an estimated propagation channel and, assuming that the delayed signals reside only within GI, $H^\wedge$ can be expressed by a diagonal matrix of Nc * Nc. Further, Nc denotes the number of subcarriers for MC-CDM. Further, $H^\wedge$ can be expressed by equation (5) below:

$$\hat{H} = \begin{pmatrix} \hat{H}_1 & & & 0 \\ & \hat{H}_2 & & \\ & & \ddots & \\ 0 & & & \hat{H}_{Nc} \end{pmatrix} \quad \cdot \cdot \cdot \quad (5)$$

S included in equation (4) denotes a transmitted symbol, and can be expressed as a vector of Nc * 1 as shown by equation (6).

$$S^T = (S_1, S_2, \cdots, S_{Nc}) \quad \cdot \cdot \cdot \quad (6)$$

Similarly, the received signal R and the noise component N can be expressed as a vector of Nc * 1 as shown by equation (7) and (8).

$$R^T = \left( R_1, R_2, \cdots, R_{Nc} \right) \quad \cdot \cdot \cdot \quad (7)$$

$$N^T = \left( N_1, N_2, \cdots, N_{Nc} \right) \quad \cdot \cdot \cdot \quad (8)$$

It will be noted in equations (6) to (8) that the suffix T denotes a transposed matrix.

When a received signal as described above is received, the output of the MMSE filter unit 46 can be expressed as a vector of Nc * 1 as shown in equation (9) below:

$$Y = WR \quad \cdot \cdot \cdot \quad (9)$$

MMSE filter unit 46 determines a MMSE filter coefficient W based on the estimated channel impulse value and the estimated noise power value. Here, the MMSE filter coefficient W can be expressed as a diagonal matrix of Nc * Nc as shown in equation (10) below:

$$W = \begin{pmatrix} W_1 & & & 0 \\ & W_2 & & \\ & & \ddots & \\ 0 & & & W_{Nc} \end{pmatrix} \quad \cdot \cdot \cdot \quad (10)$$

When the spreading is performed in the frequency domain, the respective elements of the MMSE filter coefficients $W_m$ can be expressed by equation (11) below:

$$W_m = \frac{\hat{H}_m^H}{\hat{H}_m^H \hat{H}_m + (C_{mux} - 1)\hat{H}_m^H \hat{H}_m + \sigma_N^2} = \frac{\hat{H}_m^H}{C_{mux} \hat{H}_m^H \hat{H}_m + \sigma_N^2} \cdots (11)$$

Further,

$$(C_{mux} - 1)\hat{H}_m^H \hat{H}_m$$

are interference components arising from other codes in a code multiplexing process,

$$\hat{\sigma}_N^2$$

shows the estimated noise power value. In addition, the suffix H denotes the Hamiltonian (conjugate transport).

In addition, the respective elements of the MMSE filter coefficients $W_m$ can be expressed by equation (12), assuming that code-to-code orthogonality is maintained in the time domain spreading.

$$W_m = \frac{\hat{H}_m^H}{\hat{H}_m^H \hat{H}_m + \hat{\sigma}_N^2} \quad \cdots \quad (1\,2)$$

Further, FIG. 12(a) to FIG. 12(c) show the inputting of a signal to the MMSE filter unit 46 in the first-round processing, based on the above-mentioned coefficients, where the signal has passed through the propagation channels. FIG. 12(b) shows the transfer function in which the channel impulse response is expressed in the frequency domain. Further, it will be noted in FIG. 10(b), where the horizontal axis shows frequency and the vertical axis shows power, that in the first-round processing, the frequency selectivity is high (the power fluctuation is very steep in the frequency axis direction). This state indicates that, in MC-CDMA, the code-to-code orthogonality is collapsed, so that multicode interference occurs.

Next, the operation of the MMSE filter unit will now be described at the time of repetition. First, during the repeated demodulation, the replica signal $\hat{r}_i$ used in the i-th soft canceller block unit 45-i can be expressed by equation (13) below:

$$\hat{r}_i = \left(\hat{h} - \hat{h}_i\right) \otimes \hat{s} \quad \cdots \quad (1\,3)$$

where $\hat{h}_i$ denotes a delayed profile extracted from the delayed signals only to be processed in the i-th soft canceller block 45-i. In addition, $s^{\hat{}}(t)$ denotes a replica signal calculated based on the decoding result $\lambda 2$ including the logarithmic likelihood ratio obtained from the preceding MAP decoding.

$\otimes$

shows the convolution operation. Therefore, the output of the soft canceller block unit 45-i, that is, the output $\tilde{R}_i$ of the i-th soft canceller block unit 45 shown in FIG. 4, can be expressed by equation (14) below:

$$\tilde{R}_i = R - \hat{R}_i = \left[\hat{H}_1 \hat{H}_2 \cdots \hat{H}_B\right]\left[\hat{S}^T \hat{S}^{'T} \cdots \hat{S}^T\right]^T + \Delta = \hat{H}\hat{S}' + \Delta = \left[\tilde{R}_1^T \tilde{R}_2^T \cdots \tilde{R}_B^T\right]^T \quad \cdots \quad (1\,4)$$

where $\Delta$ is assumed to include the replica uncertainty-based error signal and thermal noise components. At this time, the output Y' of the MMSE filter unit 46 can be expressed by equation (15) below:

$$Y' = W' \tilde{R}' = \begin{bmatrix} W'_1 W'_2 \cdots W'_B \end{bmatrix} \cdot \begin{bmatrix} \tilde{R}_1^T & \tilde{R}_2^T & \cdots \tilde{R}_B^T \end{bmatrix}^T \quad \cdots \quad (15)$$

where, assuming that the replica signal has been generated with high accuracy, and that $\Delta$ does not include the replica-based components but only thermal noise components, a partial matrix of the MMSE filter coefficients can be expressed as a diagonal matrix as shown in equation (16) below:

$$W'_i = \begin{bmatrix} W'_{i,1} & & & 0 \\ & W'_{i,2} & & \\ & & \ddots & \\ 0 & & & W'_{i,Nc} \end{bmatrix} \quad \cdots \quad (16)$$

In addition, the input signal to the MMSE filter 46 has come to have lowered frequency selectivity and to be in the flat fading state. Therefore, assuming that there is no multicode interference, the respective elements can be expressed by equation (17) below:

$$W'_{i,m} = \frac{\hat{H}_{i,m}^H}{\displaystyle\sum_{i'=1}^{B} \hat{H}_{i',m}^H \hat{H}_{i',m} + \hat{\sigma}_N^2} \quad \cdots \quad (17)$$

Further, it will be noted here that $\hat{H}_{i',m}$ is a transfer function for the m-th propagation channel in the i'-th soft canceller block unit, while $\hat{H}_{i',m}^H$ denotes the Hamiltonian for $\hat{H}_{i',m}$.

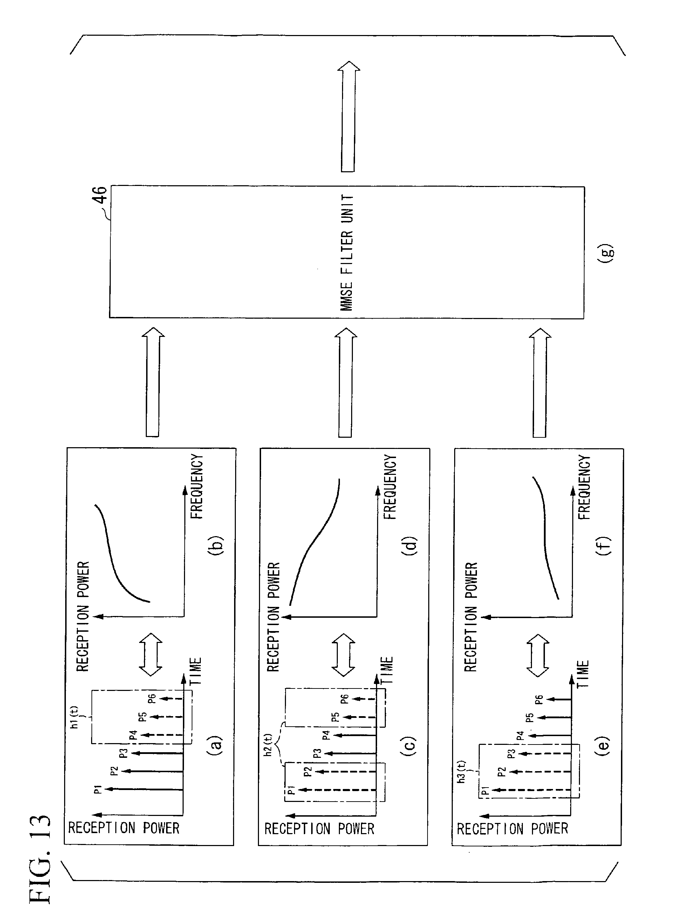

FIG. 13(a) to FIG. 13(g) show an estimated channel impulse response in the repeated processing and the MMSE filter unit according to the first embodiment of the invention. It will be seen in FIG. 13 that the signals, which have passed through the propagation channels in the repetition process, are inputted to the MMSE filter unit 46 based on the above-mentioned MMSE filter coefficients. It will also be noted here that the number B of soft canceller block units is assumed to be three.

The MMSE filter unit 46 is adapted to use, for the first-round demodulation, the MMSE filter coefficients $W_m$ expressed by equation (11) or (12) and to use, for the repeated demodulations, the MMSE filter coefficients $W'_{i,m}$ expressed by equation (17).

It can be seen that in the repetition process, the frequency selectivity is lowered (very small power fluctuation in the frequency axis direction). Under this state, the code-to-code orthogonality is maintained in the MC-CDMA, so that multicode interference is hardly generated. As described above, the repetition process brings about the advantage of the removal of the delayed wave having a delay exceeding the guard interval GI, as well as the elimination of the multicode interference.

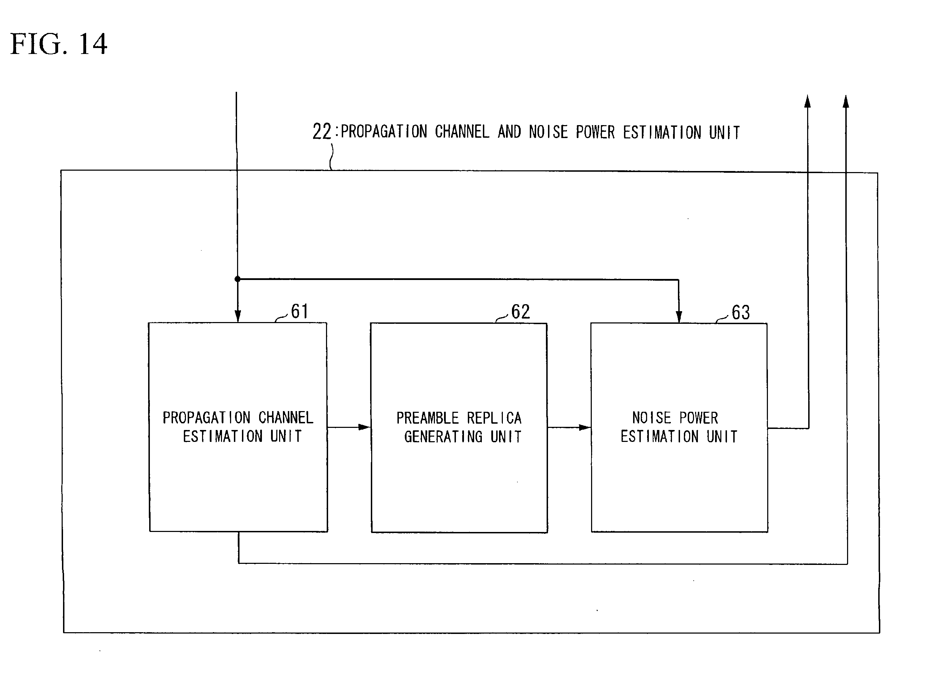

FIG. 14 is a diagram illustrating the configuration of the propagation channel and noise power estimation unit 22 (see FIG. 3) according to the first embodiment of the invention. The propagation channel and noise power estimation unit 22 is provided with a propagation channel estimation unit 61, a preamble replica generating unit 62, and a noise power estimation unit 63.

The propagation channel estimation unit 61 estimates the channel impulse response through the use of the pilot channel PICH contained in the received signal.

The preamble replica generating unit 62 generates the replica signal of the pilot channel PICH through the use of the estimated channel impulse response value obtained by the propagation channel estimation unit 61 and the input waveform of the known pilot channel PICH. The noise power estimation unit 63 performs the noise power estimation by calculating the difference of the pilot channel PICH component contained in the received signal and the pilot channel PICH replica signal output from the preamble replica generating unit 62.

Further, as the propagation channel estimating method of the propagation channel estimation unit 61, there can be used various methods, such as a method of performing the deduction through the use of the RLS algorithm based on the minimum mean square error-based estimation, or a method of using the frequency correlation.

According to the first embodiment of the invention, there is provided the wireless receiver 200, wherein the delayed wave replica generating unit 41 eliminates the delayed wave from the received signal r(t) through the use of the replica signal generated by the replica signal generating unit 28 at each timing of the predetermined timing, wherein the MMSE filter unit 46 combines the delay signal-eliminated signals that are eliminated at each timing of the predetermined timing, and wherein the delay signal-eliminated signal is subjected at the soft decision output unit 50 to soft decision, thereby allowing delay signal-removed signals to be FFT processed. Also, in the receiver of the present embodiment, the removal of the delayed wave makes it possible to carry out the despreading on the signal of lowered frequency selectivity, thereby eliminating the multicode interference by the calculation whose amount is unaffected by the number of codes.

In this embodiment, the description has been made as an example in which the receiver according to the invention carries out the canceller using the soft decision result from the received signals, the replica generation, the demodulation process, and the decoding process, but the receiver may carry out the canceller using the hard decision result, the replica generation, the demodulation process, and the decoding process. In other words, the description has been made such that the soft decision is carried out by the demodulation process which demodulates (bit-decomposes) the modulated signal such as QPSK and 16QAM from the received signal, the MAP detection unit provided with the soft decision output unit for outputting the logarithmic likelihood ratio is used, but the detection unit for outputting the hard decision value may be used. In addition, there may be used a replica signal generating unit which generates the replica signal of the transmission signal from the hard decision value. Further, the description has been made such that the soft canceller block unit is used to eliminate the delayed wave based on the replica signal generated by the soft decision value, but there may be used a canceller unit which eliminates the delayed wave from the received signal based on the replica signal generated by the hard decision value.

In addition, in this embodiment, when the outputs of the respective soft canceller block units are combined, the MMSE combining unit is used as a technique of the linear combination, but ZF (zero forcing) or MRC (maximum ratio combining) may be used.

In addition, a non-linear combination may be employed.

In addition, in this embodiment, the description has been made in the case where the invention is applied to the MC-CDM system, but the OFDM system and the single carrier system may be employed.

(Second Embodiment)

Next, the second embodiment according to the invention will be described. In this embodiment, the setting method of a predetermined time zone of a desired interval which is extracted by eliminating the delayed wave replica from the received signal will be described using another embodiment in addition to the setting method in which the respective signal intervals are overlapped with each other. Since the second embodiment is different from the first embodiment in the configuration of the MAP detection unit of the wireless receiver, only the configuration of the MAP detection unit will be described and the other configurations will be omitted.

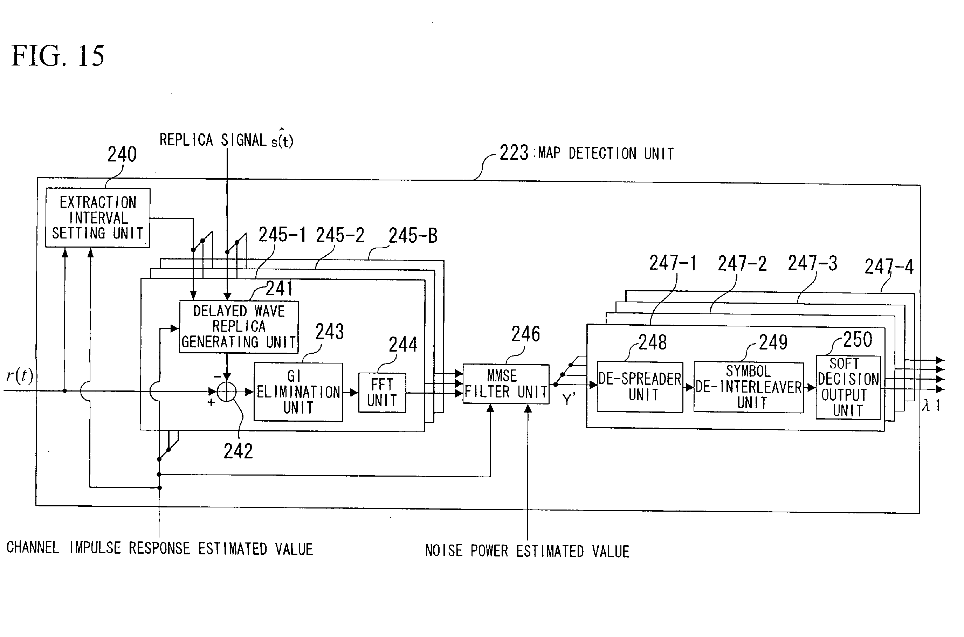

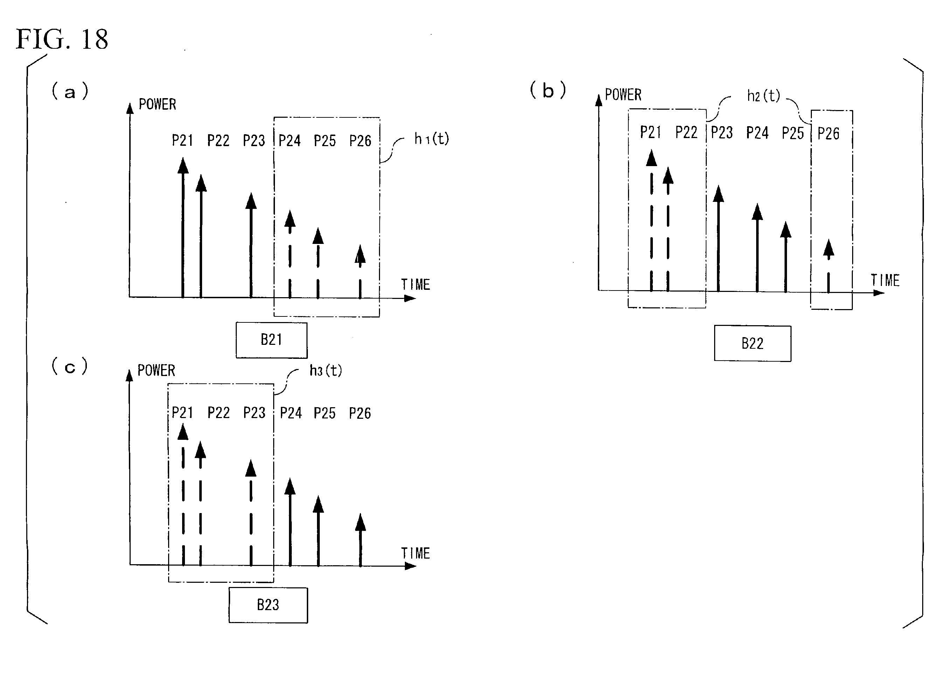

FIG. 15 is a diagram illustrating an example of the configuration of the MAP detection unit according to the second embodiment of the invention.

The MAP detection unit 223 is provided with an extraction interval setting unit 240 (also referred to as a time zone setting unit), soft canceller block units 245-1 to 245-B, the MMSE (minimum mean square error) filter unit 246, and the code-by-code logarithmic likelihood ratio output units 247-1 to 247-4. In addition, each of the soft canceller block units 245-1 to 245-4 is provided with a delayed wave replica generating unit 241, an adder unit 242, the GI elimination unit 243, and the FFT unit 244. Each of the code-by-code logarithmic likelihood ratio output units 247-1 to 247-4 is provided with a de-spreader unit 248, a symbol de-interleaver unit 249, and a soft decision output unit 250.

The configuration of the MAP detection unit 223 according to the second embodiment is substantially equal to that of the MAP detection unit 23 (see FIG. 4) according to the first embodiment, but the process of the extraction interval setting unit 240 is different from that of the first embodiment. In addition, the number of the soft canceller block units 245-1 to 245-B in this embodiment is set according to the division number B. The other configurations are the same as those in the above-mentioned first embodiment.

The extraction interval setting unit 240 sets a plurality of time zones such that at least a part of the signals extracted from the plurality of time zones of the received signal r(t) is overlapped and the signal power in the time zone is increased to be as large as possible, and the setting result is output to the delayed wave replica generating unit 241.

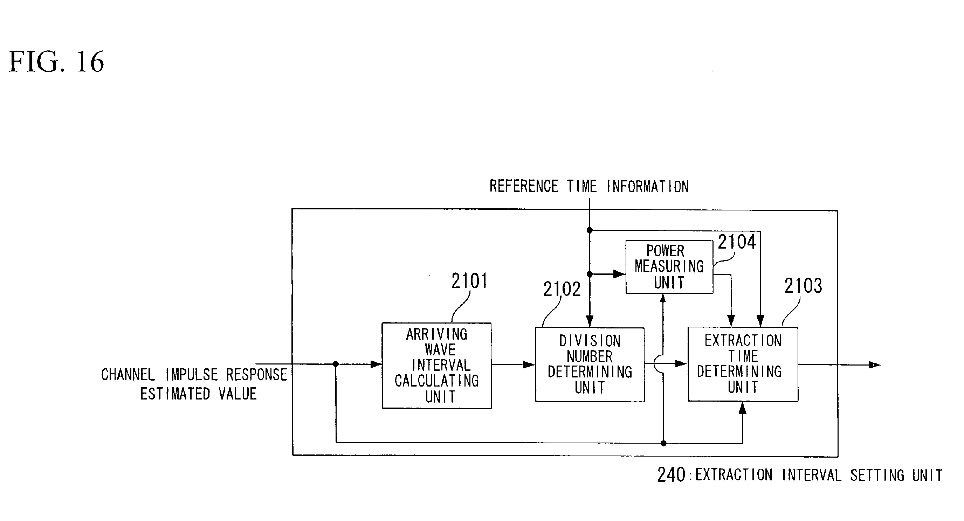

FIG. 16 is a block diagram illustrating the configuration of the extraction interval setting unit 240 according to the second embodiment of the invention. As shown in FIG. 16, the extraction interval setting unit 240 is provided with an arriving wave interval calculating unit 2101, a division number determining unit 2102, an extraction time determining unit 2103, and a power measuring unit 2104.

Similarly to the arriving wave interval calculating unit 101 according to the first embodiment, the arriving wave interval calculating unit 2101 calculates an estimated interval $T_{all}$ of the delayed wave which arrives from the estimated impulse response value as the estimated propagation channel value.

Similarly to the division number determining unit 102 according to the first embodiment, the division number determining unit 2102 calculates a division number B based on the output from the arriving signal interval calculating unit 2101 and the predetermined reference time information set in advance.

The power measuring unit 2104 calculates the signal power of the reference time zone which is obtained from the reference time information based on the division number B, the reference time information and the impulse response estimated value.

The extraction time determining unit 2103 inputs the time zones to the soft canceller block units 245-1 to 245-B, in which the time zones are extracted by the respective soft canceller block units 245-1 to 245-3 based on the division number B, the reference time information, the impulse response estimated value, and the interval power value calculation result.

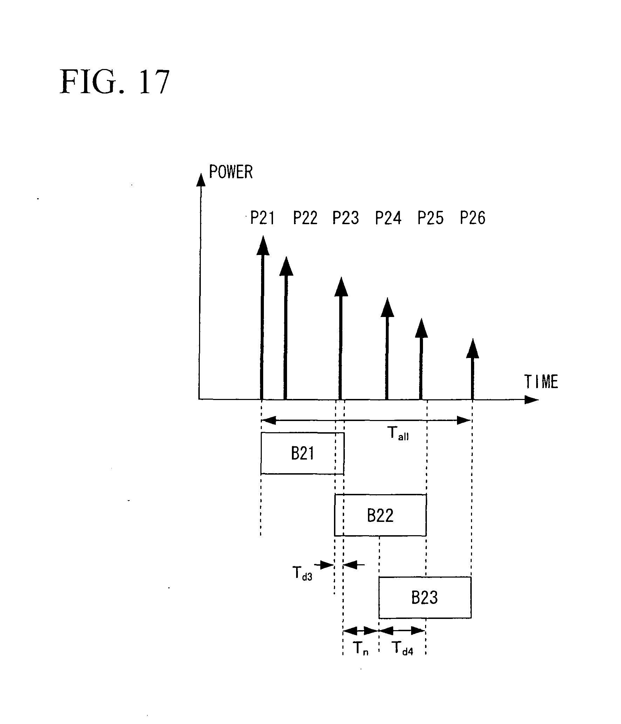

As an example, FIG. 17 shows the case where it is estimated that there are a delayed wave P21 to a delayed wave P26 from the received signal in the impulse response value, the interval calculating unit 2101 calculates the interval from the delayed wave P21 to the delayed wave P26 as the estimated interval $T_{all}$ of the arriving delayed signals, and the division number determining unit 2102 calculates the division number as B=3. The time zone B21, the time zone B22, and the time zone B23 show the intervals which are extracted in the respective soft canceller block units 45-1 to 45-3, and the interval width is obtained from the reference time information.

The extraction interval setting unit 240 matches the head of the time zone B21 with the delayed wave P21 and the tail of the time zone B23 with the delayed wave P26, so that the power of the time zone B21 corresponds to the power of a sum of the delayed wave P21, the delayed wave P22, and the delayed wave P23, and the power of the time zone B23 corresponds to the power of a sum of the delayed wave P24, the delayed wave P25, and the delayed wave P26.

In addition, the extraction interval setting unit 240 sets at least one time zone (here, the time zone B22) such that the power of the signal (here, P23 to P25) included in at least one time zone (here, the time zone B22) of the plurality of time zones (here, the time zones B21 to B23) to be extracted is maximized. In other words, the extraction interval setting unit 240 slides the time zone B22 in an interval different from those of the time zone B21 and the time zone B23 in the interval $T_n$, measures the power value in the time zone B22, and selects the interval in which the power value in the time zone B22 is maximized. In FIG. 17, the extraction interval setting unit 240 sets the interval including the delayed signals P23, P24, and P25 as the time zone B22. The time zone B22 which is set to the time zone including the above-mentioned delayed signals P23, P24, and P25 is overlapped with the time zone B21 in the signal interval $T_{d3}$, overlapped with the time zone B23 in the time interval $T_{d4}$, and the signal interval $T_d$ which is the difference between the time zone and the length B times that of the GI length $T_{GI}$ as the reference time $T_b$ in equation (3 ") becomes $T_d=T_{d3}+T_{d4}$.

The extraction time determining unit 2103 determines the time zones extracted by the respective soft canceller block units 45-1 to 45-3 to the time zone B21, the time zone B22, and the time zone B23 in which the power value in the interval selected by the power measuring unit is maximized, and outputs the respective time zones.

The delayed wave replica generating unit 241 belonging to each of the soft canceller block units 245-1 to 245-B generates the delayed wave replica for extracting the signal in the time zone of the signal interval which is set based on the channel impulse response estimated value and the replica signal $s^{\wedge}(t)$ generated by the replica signal generating unit 28, and the adder unit 242 subtracts the delayed replica from the received signal r(t).

FIG. 18(a) to FIG. 18(c) show the delayed signals which are eliminated by the respective soft canceller block units 45-1 to 45-3 based on the set time zones B21 to B23 as described above. In FIG. 18(a) to FIG. 18(c), the delayed signals surrounded by a chain line show the replicas in which undesired signal components are eliminated and which is generated when the desired signal component are extracted.

The adder unit 242 of the soft canceller block unit 245-1 subtracts the resultant value of the convolution operation of the impulse response $h_1(t)$ and the replica signal $s^{\wedge}(t)$ from the received signal r(t). When the replica is correctly generated, the output of the adder unit 242 of the soft canceller block unit 245-1 can be considered as the signal received via the propagation channel expressed by (h(t) - $h_1(t)$), and the signal components of the time zone B21 are extracted from the adder unit 242.

The adder unit 242 of the soft canceller block unit 245-2 subtracts the resultant value of the convolution operation of the impulse response $h_2(t)$ and the replica signal $s^{\wedge}(t)$ from the received signal r(t). When the replica is correctly generated, the output of the adder unit 242 of the soft canceller block unit 245-2 can be considered as the signal received via the propagation channel expressed by (h(t) - $h_2(t)$), and the signal components of the time zone B22 are extracted from the adder unit 242.

The adder unit 242 of the soft canceller block unit 245-3 subtracts the resultant value of the convolution operation of the impulse response h₃(t) and the replica signal s^(t) from the received signal r(t). When the replica is correctly generated, the output of the adder unit 242 of the soft canceller block unit 245-3 can be considered as the signal received via the propagation channel expressed by (h(t) - h₃(t)), and the signal components of the time zone B23 are extracted from the adder unit 242.

Description has been made that the signal power of the time zone to be extracted by the extraction time setting unit 240 is set to be maximized, but the time zone B22 may be set such that a predetermined signal power value is set in advance and the difference between the power measured by the power measuring unit 2104 and the predetermined signal power value is zero. For example, the predetermined signal power value is a value for maintaining the signal power value to obtain a predetermined error characteristic in advance. In addition, instead of the signal power value, the SINR may be employed. By setting the extraction interval to satisfy the predetermined signal power set in advance, it is possible to maintain a uniform transmission quality.

As described above, since the time zones of the signals extracted by each of the soft canceller block units 245-1 to 245-B are set such that a predetermined reference interval width is maintained and a time zone in which the respective signal intervals are overlapped with each other is set to increase the signal power in the time zone to be extracted as much as possible, the probability of generating the signal interval in which the signal power in each time zone or the SINR is extremely reduced can be lowered. Further, since a predetermined reference interval width can be maintained, the probability of generating a time zone in which elimination residual error caused when the replica is subtracted from the received signal is extremely increased is lowered.

(Third Embodiment)

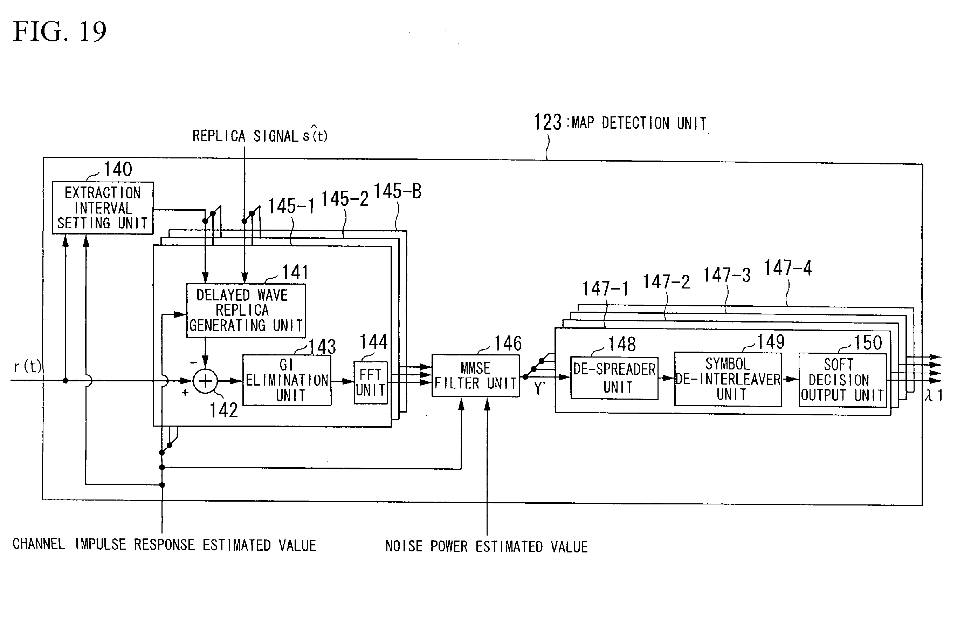

FIG. 19 is a diagram illustrating the configuration of the MAP detection unit 123 in the wireless receiver 200 according to the third embodiment of the invention. The MAP detection unit 123 is provided with an extraction interval setting unit 140 (also referred to as a time zone setting unit), soft canceller block units 145-1 to 145-B, the MMSE (minimum mean square error) filter unit 146, and the code-by-code logarithmic likelihood ratio output units 147-1 to 147-4.

Each of the soft canceller block units 145-1 to 145-B is provided with a delayed wave replica generating unit 141, an adder unit 142, the GI elimination unit 143, and the FFT unit 144. Each of the code-by-code logarithmic likelihood ratio output units 147-1 to 147-4 is provided with a de-spreader unit 148, a symbol de-interleaver unit 149, and a soft decision output unit 150.

The configuration of the wireless receiver 200 according to the third embodiment is equal to those of the wireless receiver 200 and the MAP detector 23 (see FIG. 4) according to the first embodiment, but the extraction interval setting unit 40 in the first embodiment is different from that of the extraction interval setting unit 140 in this embodiment. In addition, the number of the soft canceller block units 145-1 to 145-B in this embodiment is set according to the division number B. The other configurations are the same as those in the above-mentioned first embodiment.

In the third embodiment, the extraction interval setting unit 140 calculates the reference power by the reference time information and the impulse response estimated value from the received signal and then divides the time zone to be extracted such that the difference between the power of the received signal in each of the time zones and the reference power becomes a predetermined power difference. When the predetermined power difference between the reception power of the time zone and the reference power does not satisfy the predetermined power difference, the extraction interval setting unit divides the time zone to be overlapped with another adjacent time zone. The division number in this case is determined by the reference power and the impulse response estimated value.

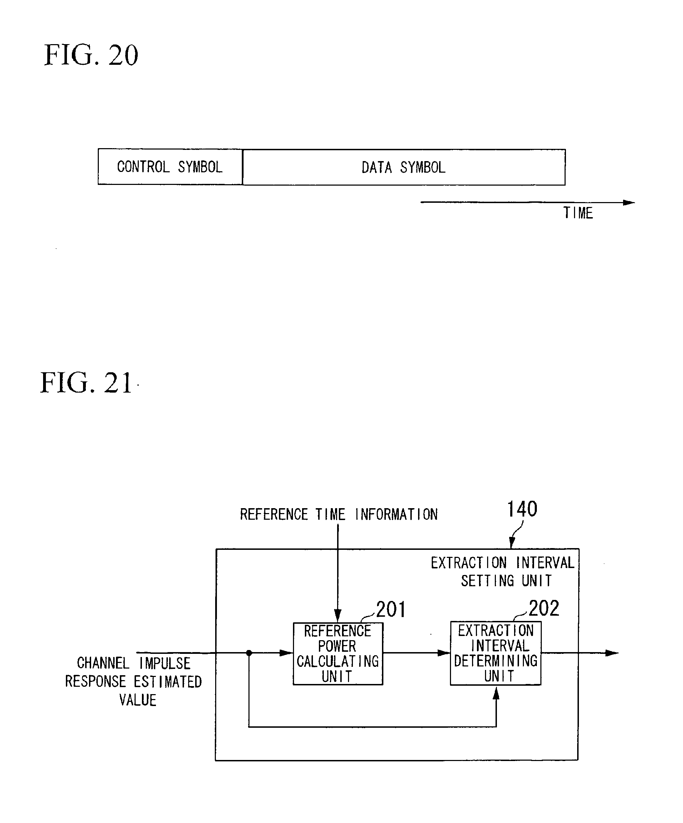

Further, the reference time information may be obtained from a control symbol in the received signal r(t), for example. In other words, as shown in FIG. 20, the control symbol is sent before a data symbol, and the reference time information can be obtained from the control symbol before the data symbol. The reference time information may be known in a transmitter and a receiver in advance.

FIG. 21 shows the configuration of the extraction interval setting unit 140. As shown in FIG. 21, the extraction interval setting unit 140 includes a reference power calculating unit 201 and an extraction interval determining unit 202. In the following, the case where the information in which the GI length is set as the reference time information will be described.

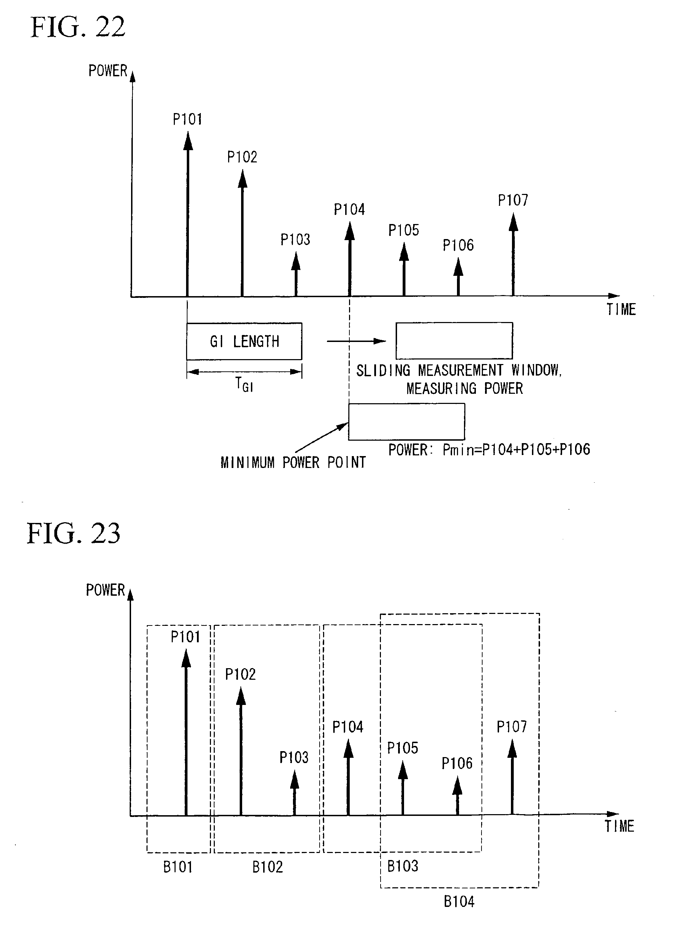

The impulse response estimated value and the GI length as the reference time information are input to the reference power calculating unit 201, and the reference power calculating unit 201 calculates the power value, which is a minimum value in the GI length interval, as the reference power. For example, as shown in FIG. 22, when it is estimated that 7 signals P101 to P107 arrive as the impulse response estimated values, the reference power calculating unit sets a measurement window of the GI length $T_{GI}$, slides the measurement window from the impulse response estimated value of the delayed wave P101 to the impulse response estimated value of the delayed wave P107, measures a path power of the interval within the measurement window in the GI length at each slide point, and outputs the minimum power $P_{min}$ among the measured powers. In FIG. 22, the power when the slide point matches with the delayed wave P104 becomes the sum of powers of the delayed signals P104, P105, and P106, and becomes the minimum power among the respective slide points.

The extraction interval determining unit 202 sets the channel impulse response estimated value and the minimum power $P_{min}$ output by the reference power calculating unit 201 as the reference power, calculates the time width of each time zone when the power value of each time zone is divided to be approximated to the reference power $P_{min}$, and inputs the time width of each time zone to the delayed wave replica generating unit 141 of each of the soft canceller block units 145-1 to 145-B. Further, the extraction interval setting unit 140 may calculate an arriving time of the path belonging to each interval instead of the time width of each time zone.

As described above, FIG. 23 shows an example when the respective time zones are divided such that the power value of each time zone becomes the reference power value $P_{min}$. First, the impulse response estimated values are sequentially set of the time zones from the delayed wave (including a direct signal) of an early arriving time such that the difference between the power value (the sum of powers of the delayed signals belonging to the time zone) of the delayed wave belonging to each time zone and the reference power value $P_{min}$ becomes a predetermined power difference. In other words, in FIG. 23, the power value obtained from the impulse response estimated value of the delayed wave P101 is approximated to the reference power value $P_{min}$. Therefore, the time zone B101 including the delayed wave P101 is set. Next, when the power value obtained from the impulse response estimated value of the delayed wave P102 is added to the power value obtained from the impulse response estimated value of the delayed wave P103, the added power value is approximated to the reference power value $P_{min}$. Therefore, the time zone B 102 including the delayed signals P102 and P103 is set.
Next, when the power value obtained from the impulse response estimate value of the delayed wave P104, the power value obtained from the impulse response estimated value of the delayed wave P105, and the power value obtained from the impulse response estimated value of the delayed wave P106 are added, the added power value approximates to the reference power value $P_{min}$.
Therefore, the time zone B103 including the delayed signals P104, P105, and P106 is set. Accordingly, the time zone B101 to the time zone B103 can be divided into respective intervals.

Next, when there is a delayed wave in a time zone not selected by the above-mentioned process, the time zone is selected by including the delayed signals belonging to the adjacent time zone, which is determined already, such that the difference between the power value of the interval and the reference power value $P_{min}$ becomes a predetermined power difference. In the example shown in FIG. 23, since the delayed wave P107 is not selected, the time zone is selected by including the delayed wave P107 and the delayed signals of the time zone B103 adjacent thereto such that the power value of this interval approximates to the reference power value $P_{min}$. Therefore, the time zone B 104 is set in the delayed signals P105, P106, and P107 which are included in the time zone B103 already. The four time zones of the time zone B101 to the time zone B 104 determined as described above are input to the respective soft canceller block units 145-1 to 145-B as the time zones to be extracted.

Further, in the above-mentioned example, the impulse response estimated values are divided so as to be the reference power value $P_{min}$ sequentially from the signal estimated as the first arriving wave, but may be divided sequentially from the signal estimated as the finally arriving wave. In addition, in the above-mentioned example, the time zone is divided based on the arrived delayed signal, but the time zone may be determined based on a sample point of the AD converter.

The soft canceller block units 145-1 to 145-B of the MAP detector 123 are provided with blocks corresponding to the number of the division number, and can carry out the processes in parallel. In the example shown in FIG. 23, the delayed signals are divided into four time zones B101 to B 104, and the division number B is equal to 4. Therefore, as the soft canceller block units 145-1 to 145-B, at least four soft canceller block units 145-1 to 145-4 are maintained. In addition, only one soft canceller unit is provided, and each time zone may be processed in serial.

The delayed wave replica generating unit 141 of each of the soft canceller block units 145-1 to 145-B carries out the convolution operation of the impulse response estimated value of each time zone and the replica signal $s^{\wedge}(t)$ generated by the replica signal generating unit 28, and thus the delayed replica is generated to be eliminated by the adder unit 142.

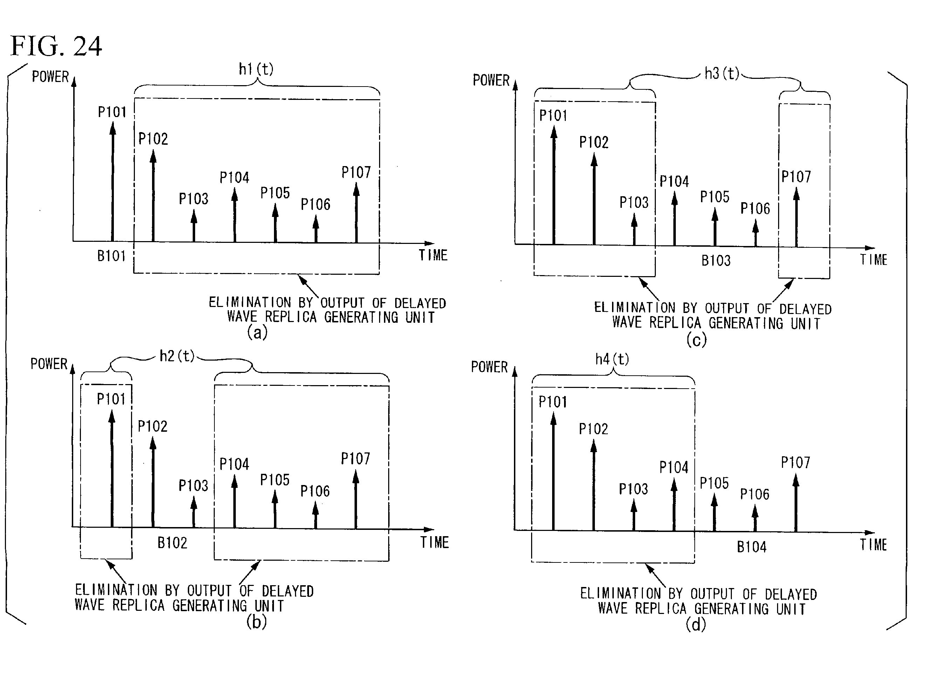

The chain line shown in FIG. 24(a) shows the delayed signals to be eliminated by the soft canceller block unit 145-1. The adder unit 142 of the soft canceller block unit 145-1 subtracts the replica signals of the delayed signals P102 to P107 generated by the convolution operation of the impulse response $h_1(t)$ and $s^{\wedge}(t)$ from the received signal $r(t)$. When the replica is correctly generated, the output of the adder unit 142 of the soft canceller block unit 145-1 can be considered as the signal received via the propagation channel expressed by $(h(t) - h_1(t))$, and the signal component P101 of the time zone B101 is extracted from the adder unit 142.

The diagonal line shown in FIG. 24(b) shows the delayed signals to be eliminated by the soft canceller block unit 145-2. The adder unit 142 of the soft canceller block unit 145-2 subtracts the replica signals of the delayed signals P101, P104 to P107 generated by the convolution operation of the impulse response $h_2(t)$ and $s^{\wedge}(t)$ from the received signal $r(t)$. When the replica is correctly generated, the output of the adder unit 142 can be considered as the signal received via the propagation channel expressed by $(h(t) - h_2(t))$, and the signal component of the time zone B 102 is extracted from the adder unit 142.

The diagonal line shown in FIG. 24(c) shows the delayed signals to be eliminated by the soft canceller block unit 145-3. The adder unit 142 of the soft canceller block unit 145-3 subtracts the replica signals of the delayed signals P101 to P103, and P107 generated by the convolution operation of the impulse response $h_3(t)$ and $s^{\wedge}(t)$ from the received signal r(t). When the replica is correctly generated, the output of the adder unit 142 can be considered as the signal received via the propagation channel expressed by $(h(t) - h_3(t))$, and the signal component of the time zone B 103 is extracted from the adder unit 142.

The diagonal line shown in FIG. 24(d) shows the delayed signals to be eliminated by the soft canceller block unit 145-4. The adder unit 142 of the soft canceller block unit 145-4 subtracts the replica signals of the delayed signals P105 to P106 generated by the convolution operation of the impulse response $h_4(t)$ and $s^{\wedge}(t)$ from the received signal r(t). When the replica is correctly generated, the output of the adder unit 142 can be considered as the signal received via the propagation channel expressed by $(h(t) - h_4(t))$, and the signal component of the time zone B 104 is extracted from the adder unit 142.

As described above, the time zone of the delayed signals is divided to be the reference power value (which is the minimum power value $P_{min}$ in the reference time, in the above-mentioned example) in the reference time of the impulse response estimated value of the received signal. When it is not satisfied with the reference power value, an interval is set to use the delayed signals included in another adjacent time zone, so that the signal after eliminating the replica is equal to or less than the reference time, and the power difference of the delayed replicas generated by the respective soft canceller block units is prevented from becoming extremely small. Further, since the division number can be suppressed to the minimum number in the conditions, the degradation in the characteristics due to the replica error caused by the low power or the low SINR of the signals belonging to the divided time zone, and due to the replica error caused by the increase in the division number, can be suppressed to the minimum.

Further, in the above-mentioned embodiment, the program for implementing the functions of the wireless transmitter 100 shown in FIG. 1 or the wireless receiver 200 shown in FIG. 3 may be recorded in a computer readable recording medium, so that the program recorded in the recoding medium is read by a computer system, and then the program is executed so as to control the wireless receiver 200. Further, the "computer system" described above is assumed to include hardware such as an OS or peripheral apparatuses.

In addition, the "computer readable recording medium" refers to a storage device such as a transportable medium, such as a floppy disk, a magneto-optical disk, a ROM, a CD-ROM, or a hard disk built in the computer system. Further, the "computer readable recording medium" is assumed to include a communication wire which is used when the program is transmitted via a communication line such as a network, such as the internet, or a telephone line, in which the program is dynamically maintained in a short time, and a volatile memory is built in the computer system of a server or a client to store the program at the proper time. In addition, the above-mentioned program may be one for implementing a portion of the above-mentioned functions, or one for implementing by being combined with program which is already recorded in the computer system.

Hereinbefore, the embodiments of the invention have been described in detail with reference to the drawings, but the specific configurations are not limited to these embodiments. Designs that do not depart from the main points of the invention are also included in the scope of the invention. Industrial applicability

The invention may be applied to a receiver and a receiving method which can reduce the amount of calculation required when a signal received from a transmitter is demodulated.

**Claims**

1. A receiver comprising:

   a replica signal generating unit which generates a replica signal as a replica of a transmission signal based on a received signal;
   a time zone setting unit which sets a plurality of time zones to be extracted such that a part of a signal interval of the received signal is included in the plurality of time zones to be extracted;
   a signal extracting unit which extracts a signal in a predetermined time zone of the receive signal based on the replica signal and a time zone which is set by the time zone setting unit;
   a combining unit which combines signals of the respective time zones extracted by the signal extracting unit; and
   a decoding processing unit which carries out decoding on the signal combined by the combining unit.

2. The receiver according to claim 1,
   wherein the signal extracting unit is provided with:

a delayed replica generating unit which generates a replica of a delayed wave of each time zone based on a propagation channel estimated value of the receive signal, a replica signal generated by the replica signal generating unit, and a time zone set by the time zone setting unit; and

a subtraction unit which subtracts the replica of the delayed wave generated by the delayed wave replica generating unit from the received signal.

3. The receiver according to claim 1 or 2,
   wherein the time zone setting unit sets the plurality of time zones such that a time length excepting a total time of a signal interval included in the plurality of time zones to be extracted from a total time of the plurality of time zones to be extracted becomes an estimated interval of a delayed wave of the received signal.

4. The receiver according to any one of claims 1 to 3,
   wherein the time zone setting unit sets at least one time zone such that a power of a signal included in at least one time zone of the plurality of time zones to be extracted is maximized.

5. The receiver according to any one of claims 1 to 3,
   wherein the time zone setting unit sets the plurality of time zones such that a signal power difference of the plurality of time zones is smaller than a predetermined value.

6. The receiver according to claim 2,
   wherein the delayed wave replica signal generating unit generates a delayed wave replica having a length shorter than a time zone set by the time zone setting unit.

7. The receiver according to any one of claims 1 to 6,
   wherein the time zone setting unit sets the plurality of time zones based on a predetermined time.

8. The receiver according to claim 7,
   wherein the time zone setting unit sets a guard interval length as the predetermined time.

9. The receiver according to any one of claims 1 to 6,
   wherein the time zone setting unit sets each of the time zones such that a difference between a signal power value of each time zone and a predetermined power value is smaller than a predetermined value.

10. The receiver according to claim 9,
    wherein the time zone setting unit sets a value smaller than a signal power in a guard interval length of a received signal as the predetermined power value.

11. A receiving method comprising:

    a replica signal generating step of generating a replica signal as a replica of a transmission signal based on a received signal;
    a time zone setting step of setting a plurality of time zones to be extracted such that a portion of a signal interval of the received signal is included in the plurality of time zones to be extracted;
    a signal extracting step of extracting a signal in a predetermined time zone of the receive signal based on the replica signal and a time zone which is set in the time zone setting step;
    a combining step of combining signals of the respective time zones extracted in the signal extracting step; and
    a decoding processing step of carrying out decoding on the signal combined in the combining step.

FIG. 1

100 :WIRELESS TRANSMITTER

EP 2 178 233 A1

# FIG. 2

CODE MULTIPLEXING

RECEPTION POWER

...

$P_{PICH/DTCH}$

1

DTCH

DTCH

PICH

FRAME

TIME

EP 2 178 233 A1

FIG. 3

FIG. 4

23:MAP DETECTION UNIT

40 EXTRACTION INTERVAL SETTING UNIT

REPLICA SIGNAL $\hat{s}(t)$

41 DELAYED WAVE REPLICA GENERATING UNIT

42

43 GI ELIMINATION UNIT

44 FFT UNIT

45-1 45-2 45-3

$\tilde{R}_3$ $\tilde{R}_2$ $\tilde{R}_1$

46 MMSE FILTER UNIT

Y'

47-1 47-2 47-3 47-4

48 DE-SPREADER UNIT

49 SYMBOL DE-INTERLEAVER UNIT

50 SOFT DECISION OUTPUT UNIT

λ1

r(t)

CHANNEL IMPULSE RESPONSE ESTIMATED VALUE

NOISE POWER ESTIMATED VALUE

# FIG. 5

S1 FIRST -ROUND? ——NO REPETITION PROCESS

YES FIRST-ROUND PROCESS

S2 — GI ELIMINATION

S3 — FFT

S4 — MMSE FILTERING PROCESS (NORMAL PROCESS)

Cmux TIMES REPETITION

S5 — DESPREADING PROCESS

S6 — SYMBOL DE-INTERLEAVER

S7 — SOFT DECISION BIT (LLR) OUTPUTTING

S8 — BIT DE-INTERLEAVER

S9 — MAP DECODING (TURBO DECODING)

S10 IS REPEATED PROCESS A PREDETERMINED NUMBER OF TIMES ? ——NO

YES

END

B TIMES REPETITION

S20 — ELIMINATING SIGNALS OTHER THAN A PREDETERMINED DELAYED SIGNAL

S21 — GI ELIMINATION

S22 — FFT

S23 — MMSE FILTERING PROCESS (MMSE COMBINING OF B OUTPUTS)

S19 — GI INSERTION

S18 — IFFT

S17 — SCRAMBLING

S16 — PICH MULTIPLEXING

S15 — DTCH MULTIPLEXING

S14 — SPREADING PROCESS

S13 — SYMBOL INTERLEAVER

S12 — GENERATING MODULATION SIGNAL REPLICA

S11 — PERFORMING BIT INTERLEAVING ON LOGARITHMIC LIKELIHOOD RATIO (LLR)

Cmux TIMES REPETITION

FIG. 6

REFERENCE TIME INFORMATION

CHANNEL IMPULSE
RESPONSE ESTIMATED
VALUE

| ~101 | ~102 | ~103 |
|---|---|---|
| ARRIVING WAVE INTERVAL CALCULATING UNIT | DIVISION NUMBER DETERMINING UNIT | EXTRACTION TIME DETERMINING UNIT |

EXTRACTION INTERVAL SETTING UNIT

40

FIG. 7

POWER

P1

P2

P3

P4

P5

P6

TIME

$T_{all}$

# FIG. 8

(a)

POWER

P1 P2 P3 P4 P5 P6

TIME

$T_{all}=1.5*T_{GI}$

OFDM SYMBOL | GI | DATA

$T_{GI}$

(b)

$T_{all}$ | $T_d$

MAXIMUM DELAYED TIME

OFDM SYMBOL | GI | GI

$T_b=T_{GI}$

(c)

POWER

P1 P2 P3 P4 P5 P6

TIME

$T_d$

B1

$T_{GI}$

B2

$T_{GI}$

EP 2 178 233 A1

FIG. 9

FIG. 10

(a)

POWER

P1

P2

P3

h1(t)

P4

P5

P6

TIME

B1

(b)

POWER

h2(t)

P1

P2

P3

P4

P5

P6

TIME

B2

(c)

POWER

h3(t)

P1

P2

P3

P4

P5

P6

TIME

B3

FIG. 11

(a)                                    (b)

EP 2 178 233 A1

# FIG. 12

RECEPTION POWER        RECEPTION POWER

P1 P2 P3 P4

P5

P6

TIME                        FREQUENCY

(a)                          (b)

MMSE FILTER UNIT

46

(c)

EP 2 178 233 A1

FIG. 13

RECEPTION POWER

h1(t)

P1
P2
P3
P4
P5
P6

TIME

(a)

RECEPTION POWER

FREQUENCY

(b)

RECEPTION POWER

h2(t)

P1
P2
P3
P4
P5
P6

TIME

(c)

RECEPTION POWER

FREQUENCY

(d)

RECEPTION POWER

h3(t)

P1
P2
P3
P4
P5
P6

TIME

(e)

RECEPTION POWER

FREQUENCY

(f)

MMSE FILTER UNIT

46

(g)

EP 2 178 233 A1

FIG. 14

22: PROPAGATION CHANNEL AND NOISE POWER ESTIMATION UNIT

61 — PROPAGATION CHANNEL ESTIMATION UNIT

62 — PREAMBLE REPLICA GENERATING UNIT

63 — NOISE POWER ESTIMATION UNIT

# FIG. 15

REPLICA SIGNAL $s(\hat{t})$

240

EXTRACTION
INTERVAL
SETTING UNIT

223 : MAP DETECTION UNIT

245-1 245-2 245-B

241

DELAYED WAVE
REPLICA
GENERATING UNIT

243

244

GI
ELIMINATION
UNIT

FFT
UNIT

242

$r(t)$

246

MMSE
FILTER UNIT

Y'

247-1 247-2 247-3 247-4

248

DE-SPREADER
UNIT

249

SYMBOL
DE-INTERLEAVER
UNIT

250

SOFT
DECISION
OUTPUT
UNIT

$\lambda 1$

CHANNEL IMPULSE RESPONSE ESTIMATED VALUE

NOISE POWER ESTIMATED VALUE

EP 2 178 233 A1

# FIG. 16

REFERENCE TIME INFORMATION

POWER
MEASURING
UNIT
2104

2101

2102

2103

CHANNEL IMPULSE RESPONSE
ESTIMATED VALUE

ARRIVING
WAVE
INTERVAL
CALCULATING
UNIT

DIVISION
NUMBER
DETERMINING
UNIT

EXTRACTION
TIME
DETERMINING
UNIT

240:EXTRACTION INTERVAL SETTING UNIT

FIG. 17

# FIG. 18

(a)

B21

(b)

B22

(c)

B23

EP 2 178 233 A1

FIG. 19

123 :MAP DETECTION UNIT

REPLICA SIGNAL s(t)

140
EXTRACTION INTERVAL SETTING UNIT

145-1 145-2 145-B

141
DELAYED WAVE REPLICA GENERATING UNIT

143
GI ELIMINATION UNIT

144
FFT UNIT

142

r(t)

146
MMSE FILTER UNIT

Y'

147-1 147-2 147-3 147-4

148
DE-SPREADER UNIT

149
SYMBOL DE-INTERLEAVER UNIT

150
SOFT DECISION OUTPUT UNIT

λ 1

CHANNEL IMPULSE RESPONSE ESTIMATED VALUE

NOISE POWER ESTIMATED VALUE

EP 2 178 233 A1

FIG. 20

| CONTROL SYMBOL | DATA SYMBOL |
|---|---|

TIME

FIG. 21

REFERENCE TIME INFORMATION                    140

EXTRACTION INTERVAL
SETTING UNIT

201                                202

| REFERENCE POWER CALCULATING UNIT | EXTRACTION INTERVAL DETERMINING UNIT |
|---|---|

CHANNEL IMPULSE
RESPONSE ESTIMATED
VALUE

FIG. 22

FIG. 23

# FIG. 24

ELIMINATION BY OUTPUT OF DELAYED
WAVE REPLICA GENERATING UNIT
(a)

ELIMINATION BY OUTPUT OF DELAYED
WAVE REPLICA GENERATING UNIT
(c)

ELIMINATION BY OUTPUT OF DELAYED
WAVE REPLICA GENERATING UNIT
(b)

ELIMINATION BY OUTPUT OF DELAYED
WAVE REPLICA GENERATING UNIT
(d)

EP 2 178 233 A1

FIG. 25

FIG. 26

(a)

(b)

# FIG. 27

(a)

FREQUENCY

SFfreq

(b)

$C_{8,1}$ | 1 | 1 | 1 | 1 | 1 | 1 | 1 | 1 |

$C_{8,2}$ | 1 | 1 | 1 | 1 | -1 | -1 | -1 | -1 |

ORTHOGONAL

$C_{8,7}$ | 1 | -1 | -1 | 1 | 1 | -1 | -1 | 1 |

## FIG. 28

(a)

$C_{8,1}=[1,1,1,1,1,1,1,1]$

(b)

$C_{8,1}=[1,1,1,1,1,1,1,1]$

| **INTERNATIONAL SEARCH REPORT** | International application No. |
|---|---|
| | PCT/JP2008/064106 |

A.   CLASSIFICATION OF SUBJECT MATTER
*H04J11/00(2006.01)i, H04B1/16(2006.01)i, H04B1/707(2006.01)i*

According to International Patent Classification (IPC) or to both national classification and IPC

B.   FIELDS SEARCHED

Minimum documentation searched (classification system followed by classification symbols)
*H04J11/00, H04B1/16, H04B1/707*

Documentation searched other than minimum documentation to the extent that such documents are included in the fields searched
Jitsuyo Shinan Koho       1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| E,X | JP 2008-236065 A   (Nippon Telegraph And Telephone Corp.), 02 October, 2008 (02.10.08), Par. Nos. [0027] to [0030], [0126] to [0144]; Figs. 3, 10 (Family: none) | 1,7,11 |
| P,A | WO 2007/088752 A1   (Sharp Corp.), 09 August, 2007 (09.08.07), Full text; all drawings (Family: none) | 1-11 |
| A | JP 2007-158721 A   (Sharp Corp.), 21 June, 2007 (21.06.07), Full text; all drawings (Family: none) | 1-11 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 October, 2008 (27.10.08) | 11 November, 2008 (11.11.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/064106 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-88719 A  (Sharp Corp.),<br>05 April, 2007 (05.04.07),<br>Full text; all drawings<br>(Family: none) | 1-11 |
| A | JP 2005-150839 A  (NTT Docomo Inc.),<br>09 June, 2005 (09.06.05),<br>Full text; all drawings<br>& US 2005/0129136 A1    & EP 1531592 A2<br>& CN 1617534 A | 1-11 |
| A | JP 2005-79911 A  (Fujitsu Ltd.),<br>24 March, 2005 (24.03.05),<br>Full text; all drawings<br>(Family: none) | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007204544 A
- JP 2004221702 A
- JP 2005198223 A

**Non-patent literature cited in the description**

- **Zhou, Y. ; Wang, J. ; Sawahashi, M.** Downlink Transmission of Broadband OFCDM Systems-Part I: Hybrid Detection. *IEEE Transactions on Communication,* vol. 53 (4), 718-729
- **Zhou, Y. ; Wang, J. ; Sawahashi, M.** Downlink Transmission of Broadband OFCDM Systems-Part III: Turbo-Coded. *IEEE Journal on selected Areas in Communications,* vol. 24 (1), 132-140
- Frequency-domain Soft Interference cancellation for Multicode CDMA Transmissions. **K. Ishihara ; K. Takeda ; F. Adachi.** Proc. IEEE. Spring